(19) Europäisches Patentamt
European Patent Office
Office européen des brevets

(11) **EP 2 587 225 B1**

(12) **EUROPÄISCHE PATENTSCHRIFT**

(45) Veröffentlichungstag und Bekanntmachung des Hinweises auf die Patenterteilung:
**17.01.2018 Patentblatt 2018/03**

(51) Int Cl.:
*G01D 5/249* (2006.01) *F02D 41/00* (2006.01)

(21) Anmeldenummer: **12184008.6**

(22) Anmeldetag: **12.09.2012**

(54) **VERFAHREN ZUR ERFASSUNG EINES DREHWINKELS**

METHOD FOR DETERMINING A ROTATION ANGLE

PROCÉDÉ DE DÉTERMINATION D'UN ANGLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2011 DE 102011054933**

(43) Veröffentlichungstag der Anmeldung:
**01.05.2013 Patentblatt 2013/18**

(73) Patentinhaber: **dSPACE digital signal processing and control engineering GmbH**
**33102 Paderborn (DE)**

(72) Erfinder: **Hötzel, Wolfgang**
**33154 Salzkotten (DE)**

(56) Entgegenhaltungen:
**DE-A1- 4 328 584        DE-A1-102004 053 156**
**DE-B3-102004 045 191    US-A1- 2010 281 699**

EP 2 587 225 B1

**Beschreibung**

Die Erfindung betrifft ein Verfahren zur Erfassung eines Drehwinkels gemäß dem Oberbegriff des Patentanspruchs 1.

Aus der freien Internet-Enzyklopädie WIKIPEDIA ist ein Rotations-Encoder bekannt, der mit einer Welle eines Motors verbunden werden könnte. Der Encoder bietet die Möglichkeit, einen Drehwinkel, der in Sektoren eingeteilt ist, festzustellen. Hierbei könnte vorgesehen sein, konzentrisch angeordnete Sektor-Bereiche eines Kreissektors einer kreisförmigen Encoder-Scheibe von mehreren Sensoren zeitgleich abzutasten. Nachteile an dem Rotations-Encoder sind insbesondere, dass einerseits zwingend mehrere Sensoren erforderlich sind und andererseits die Anordnung von Encoder-Scheibe und zugehörigen Sensoren einen hohen konstruktiven Aufwand erfordert, insbesondere bezüglich der Einhaltung der Fertigungstoleranzen, die von der geforderten maximal zulässigen Drehwinkel-Messabweichung des Encodersystems abhängt. zweiter gattungsgemäße Rotations-Encoder sind z.B. aus DE102004053156A1 oder DE102004045191B3 bekannt. Aus dem Dokument "Application-Note, Using the engine position (crank and cam) eTPU funktions" von G. Emerson, E. Kilbride, Freescale Semiconductor, Seiten 2 und 3, Abschnitt 3, ist bekannt, ein Zahnrad mit 35 Zähnen zur Erfassung des Drehwinkels der Antriebswelle einer Maschine zu verwenden. Das Zahnrad weist an einer vorgegebenen Position eine Zahnlücke auf, wobei die Zahnlücke als Merkmal für den Startpunkt bzw. Endpunkt einer Umdrehung des Zahnrades und der Antriebswelle dienen könnte. Zum Abtasten der Zähne und der Zahnlücken könnte ein Sensor verwendet werden. Diese technischen Lösung hat insbesondere folgenden Nachteil: Einerseits dauert je nach Lage der Zahnlücke in einem ungünstigsten Fall, die Zeit zwischen Initialisierung und der Bereitstellung einer Information über den Drehwinkel der Antriebswelle vergleichsweise lange, nämlich dann, wenn beispielsweise nach dem Initialisierungsvorgang - beispielsweise beim Start der Maschine - fast eine vollständige Umdrehung der Welle erforderlich ist, um die Zahnlücke an den Sensor zu führen.

Vor diesem Hintergrund besteht die Aufgabe der Erfindung darin, ein Verfahren anzugeben, das den Stand der Technik weiterbildet.

Die Aufgabe wird durch ein Verfahren mit den Merkmalen des Patentanspruchs 1 gelöst. Vorteilhafte Ausgestaltungen der Erfindung sind Gegenstand von abhängigen Ansprüchen.

Gemäß dem Gegenstand der Erfindung wird ein Verfahren zur Erfassung eines ersten Drehwinkels einer ersten Welle eines Motors bereitgestellt, wobei

- ein erster Markierungsträger mit sensorlesbaren Markierungen vorgesehen ist, wobei die Markierungen ein erstes Markierungsmuster ausbilden,
- das erste Markierungsmuster Markierungsabschnitte, umfassend zumindest einen ersten Markierungsabschnitt und einen zweiten Markierungsabschnitt, aufweist,
- der erste Markierungsträger von der ersten Welle in eine Rotationsbewegung versetzt wird,
- und eine Proportionalität zwischen dem Drehwinkel der ersten Welle und dem Drehwinkel des ersten Markierungsträgers besteht,

mittels eines ersten Sensors der erste Markierungsträger abgetastet wird und von dem ersten Sensor ein erstes Sensorsignal während des Abtastens erzeugt wird, wobei das erste Sensorsignal mittels der Markierungen auf dem ersten Markierungsträger moduliert wird, und wobei eine Recheneinheit vorgesehen ist, aufweisend

- eine Speichereinheit mit einem Speicherbereich mit gespeicherten Markierungsabschnitten, umfassend zumindest einen ersten gespeicherten Markierungsabschnitt und einen zweiten gespeicherten Markierungsabschnitt,
- einen Sensorsignal-Eingang,
- einen Zeitgeber mit einem Zeitsignal,

wobei mittels der Recheneinheit eine Zuordnung zwischen einem zeitlichen Verlauf des ersten Sensorsignals und dem Zeitsignal durchgeführt wird, und wobei mittels der Recheneinheit folgende Verfahrensschritte ausgeführt werden:

a) ein erster Markierungsabschnitt wird aus dem ersten Sensorsignal zurück gewonnen, und nachfolgend
b) aus dem zurückgewonnenen ersten Markierungsabschnitt wird ein erstes Ausschlusskriterium zum Ausschließen des ersten gespeicherten Markierungsabschnittes ermittelt, und nachfolgend
c) mittels des ersten Ausschlusskriteriums wird zumindest der erste gespeicherte Markierungsabschnitt ausgeschlossen, und nachfolgend
d) es wird überprüft, ob eine Differenz einer Gesamtanzahl der gespeicherter Markierungsabschnitte abzüglich einer Anzahl ausgeschlossener gespeicherter Markierungsabschnitte gleich eins ist und es wird übergegangen zu Verfahrensschritt g) falls die Differenz gleich 1 ist, es wird übergegangen zu Verfahrensschritt e) falls die Differenz größer eins ist,

e) es wird ein weiterer Markierungsabschnitt aus dem ersten Sensorsignal zurück gewonnen, es wird ein weiteres Ausschlusskriterium ermittelt, es wird mittels des weiteren Ausschlusskriteriums ein weiterer gespeicherter Markierungsabschnitt ausgeschlossen, und nachfolgend

f) der Verfahrensschritt d) wird erneut ausgeführt,

g) aus dem nicht ausgeschlossenen gespeicherten Markierungsabschnitt wird der erste Drehwinkel abgeleitet.

Im Einzelnen gibt es eine Vielzahl von Möglichkeiten, das erfindungsgemäße Verfahren auszugestalten und weiterzubilden. Dazu wird verwiesen einerseits auf die dem Patentanspruch 1 nachgeordneten Patentansprüche, andererseits auf die folgende Beschreibung in Verbindung mit den Zeichnungen.

Es sei angemerkt, dass die Abtastung des ersten Markierungsträgers mittels des ersten Sensors sequentiell durchgeführt wird, und dass während der Abtastung der Markierungsabschnitte des ersten Markierungsträgers bevorzugt Zeitinformationen des Zeitsignals dem Sensorsignal des ersten Sensors mittels der Recheneinheit zugeordnet werden. Da in einer bevorzugten Ausführungsform zumindest für einen Teil einer Umdrehung die Winkelgeschwindigkeit der ersten Welle bekannt oder abschätzbar ist und näherungsweise als konstant anzusehen ist, ergibt sich aus der Berechnungsvorschrift für die zumindest näherungsweise konstante Winkelgeschwindigkeit $\omega$, dass diese sich als Quotient, Drehwinkeländerung $\Delta\phi$ geteilt durch Zeitänderung $\Delta t$, berechnet:

$$\omega = \Delta\phi \, / \, \Delta t$$

Folglich kann für den Teil der Umdrehung der ersten Welle, in dem die Winkelgeschwindigkeit zumindest näherungsweise bekannt und näherungsweise konstant ist, aus einer Zeitänderung direkt auf die Winkeländerung geschlossen werden:

$$\Delta\phi = \omega \, {}^{*} \, \Delta t$$

Es ist desweiteren bevorzugt, dass mittels der Recheneinheit nach jedem Abtasten einer Markierung oder eines Markierungsabschnittes des ersten Markierungsträgers mittels des ersten Sensors die Winkelgeschwindigkeit aktualisiert wird.

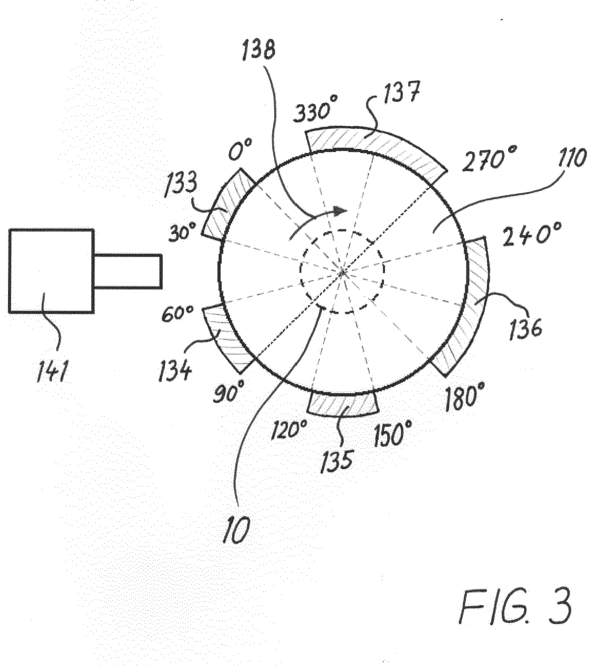

Es sei desweiteren angemerkt, dass es gemäß einer beispielhaften Ausgestaltung des ersten Markierungsträgers vorgesehen ist, gleichartig gestaltete Markierungen bzw. gleichartig gestaltete Markierungsabschnitte mehrfach in den ersten Markierungsträger zu integrieren. Am Beispiel eines als Zahnrad ausgestalteten ersten Markierungsträgers wird dies in einem der letzten Abschnitte der Beschreibung unter Bezugnahme auf die Figuren anschaulich beschrieben, siehe insbesondere Figurenbeschreibung zu Figur 3.

Eine vollständige Abtastung aller Markierungsabschnitte des ersten Markierungsträgers ist mittels des ersten Sensors nur dann ermöglicht, wenn der erste Markierungsträger zumindest eine vollständige Umdrehung ausführt, und während der vollständigen Umdrehung alle Markierungsabschnitte des ersten Markierungsträgers den ersten Sensor passieren. Einer der Vorteile der Erfindung ist aber, dass zur Feststellung des Drehwinkels der ersten Welle nicht der gesamte Markierungsträger abgetastet werden muss.

Anhand des folgenden Ausführungsbeispiels soll der Vorgang des Abtastens des ersten Markierungsträgers näher erläutert werden. Gemäß einer Ausgestaltungsform der Erfindung ist der erste Markierungsträger ein Zahnrad mit metallischen Zähnen und der erste Sensor ein induktiver Näherungsschalter, wobei die Zähne des metallischen Zahnrades während der Rotation nacheinander an dem induktiven Näherungsschalter entlanggeführt werden, damit mit dem induktiven Näherungsschalter die Zähne und/oder die Grenzflächen, an denen die Zähne beginnen oder enden, erfasst werden. Im Zuge der Abtastung des ersten Markierungsabschnittes erfolgt mittels der Recheneinheit eine Zuordnung zwischen dem von dem ersten Sensor erfassten ersten Markierungsabschnitt und dem Erfassungszeitpunkt und der Erfassungsdauer des ersten Markierungsabschnittes mittels des Zeitsignals.

Wenn die Markierungen bzw. die Markierungsabschnitte eines Markierungsträgers in den Wirkungsbereich eines Sensors gebracht werden, so dass der Sensor die Markierungen bzw. Markierungsabschnitte abtastet, so spricht man davon, dass die Markierungen bzw. Markierungsabschnitte den Sensor passieren.

Aus den bei der Erfassung eines ersten Markierungsabschnittes gewonnenen Daten ist es der Recheneinheit ermöglicht, zumindest einen ersten gespeicherten Markierungsabschnitt auszuschließen, und zwar den bzw. die gespeicherten Markierungsabschnitt bzw. Markierungsabschnitte, der bzw. die einer gespeicherten Beschreibung, die als gespeicherter Markierungsabschnitt oder als Markierungsabschnitts-Beschreibung bezeichnet wird, nicht entspricht bzw. nicht entsprechen. Der Begriff "Markierungsabschnitts-Beschreibung" ist also in dem oben genannten Zusammenhang derart auszulegen, dass ein n-ter Markierungsabschnitt des ersten Markierungsträgers durch eine n-te gespeicherte Datenmenge Mn charakterisiert ist, die von dem ersten Sensor abtastbaren technische Merkmale oder von diesen technischen Merkmalen abgeleitete Merkmale des n-ten Markierungsabschnittes des ersten Markierungsträgers umfasst, wobei n = 1, 2, ... m, und wobei m = Anzahl der Markierungsabschnitte des ersten Markierungsträgers.
Die Datenmenge Mn ist im Speicherbereich der Recheneinheit abgelegt.

Die Gesamtheit aller Markierungsabschnitts-Beschreibungen des ersten Markierungsträgers bildet die Markierungsträger-Beschreibung des ersten Markierungsträgers. Vorzugsweise sind alle Markierungsabschnitts-Beschreibungen des ersten Markierungsträgers in der Recheneinheit gespeichert. Mit anderen Worten bildet bevorzugt die Gesamtheit aller gespeicherten Markierungsabschnitte des ersten Markierungsträgers den ersten gespeicherten Markierungsträger. Somit ist eine gespeicherte Beschreibung eines n-ten Markierungsabschnitts gleichzusetzen mit einem n-ten gespeicherten Markierungsabschnitt. Dieser n-te gespeicherter Markierungsabschnitt umfasst bevorzugt in kodierter Form eine Signal-Zeit-Charakteristik oder eine Signal-Winkel-Charakteristik des n-ten Markierungsabschnittes auf dem ersten Markierungsträger.

Bevorzugt weist die Signal-Zeit-Charakteristik des n-ten gespeicherten Markierungsabschnitts ein gespeichertes Zeitintervall auf, und dieses gespeicherte Zeitintervall ist ein Maß für die Abtastdauer, in der ein Markierungsabschnitt von dem ersten Sensor abgetastet wird, wenn der erste Markierungsträger mit einer vordefinierten Winkelgeschwindigkeit rotiert und der n-te Markierungsabschnitt den Sensor passiert.

Zur Erläuterung ist nachfolgend ein Beispiel angeführt, bei dem ein erster Markierungsabschnitt aus nur einer einzigen Markierung - beispielsweise aus einem Zahn - besteht. In diesem Beispiel ist folglich der erste Markierungsabschnitt mit der ersten Markierung gleichzusetzen.

Bevorzugt werden von der Recheneinheit Abweichungen, die mittels der Recheneinheit bei dem Vergleich zwischen einer gespeicherten n-ten Markierung und einer abgetasteten n-ten Markierung festgestellt werden, im Umfang eines vordefinierten Toleranzbereiches von der Recheneinheit akzeptiert, das heißt, eine n-te Markierung wird bevorzugt trotz einer Abtastzeit-Abweichung der zugehörigen gespeichert n-ten Markierung zugeordnet, solange die Abweichung innerhalb eines vordefinierten Toleranzbereiches liegt. Trotz einer Abweichung eines abgetasteten Wertes von einem vordefinierten "nominellen" Wert, wird der abgetastete Wert von der Recheneinheit als zulässig deklariert, solange der abgetastete Wert im Toleranzbereich des "nominellen" Wertes liegt.

Beispielsweise können die Toleranzbereiche für eine Erweiterung des Wertebereichs einer in der Recheneinheit gespeicherten Markierung vorgesehen sein. In dem Beispiel ist eine erste gespeicherte Markierung durch eine "nominelle" erste Abtastzeit $\Delta t_1$ bei einer vorzugsweise konstanten ersten Winkelgeschwindigkeit $\omega_1$ definiert. Um die "nominelle" Abtastzeit wird in diesem Beispiel ein Toleranzbereich geschaffen, indem einerseits für den Minimalwert des Toleranzbereiches die "nominelle" Abtastzeit um einen Toleranzzeitwert $\Delta t_T$ verringert wird, und
andererseits für den Maximalwert des Toleranzbereiches die "nominelle" Abtastzeit um einen Toleranzwert $\Delta t_T$ vergrößert wird.

Ist beispielsweise die erste Abtastzeit $\Delta t_1$ = 1 ms und der
Toleranzzeitwert $\Delta t_T$ = 0,2 ms, so ergibt sich in dem Beispiel für die minimale erste Abtastzeit:

$$\Delta t_{1min} = \Delta t_1 - \Delta t_T = 1\ \text{ms} - 0{,}2\ \text{ms} = 0{,}8\ \text{ms}.$$

Außerdem ergibt sich für die maximale erste Abtastzeit:

$$\Delta t_{1max} = \Delta t_1 + \Delta t_T = 1\ \text{ms} + 0{,}2\ \text{ms} = 1{,}2\ \text{ms},$$

was für dieses Beispiel bedeutet, dass die erste Abtastzeit des ersten gespeicherten Markierungsträgers bei der ersten Winkelgeschwindigkeit $\omega_1$ zwischen 0,8 ms und 2,2 ms liegt. Wenn in diesem Beispiel mittels der Recheneinheit ein gespeicherter ersten Markierungsabschnitt mit einem zurückgewonnenen Markierungsabschnitt verglichen wird, und bei diesem Vergleich festgestellt wird, dass bei einer ersten Winkelgeschwindigkeit $\omega_1$ die gemessene Abtastzeit des zurückgewonnenen Markierungsabschnittes zwischen den Toleranzgrenzen $\Delta t_{1min}$ und $\Delta t_{1max}$ liegt, dann ordnet die Recheneinheit der gemessenen Abtastzeit den Wert $\Delta t_1$ zu, der charakteristisch für einen Markierungsabschnitt bzw. für einen Typ eines Markierungsabschnittes ist, beispielsweise ein kurzer Zahn oder ein langer Zahn eines abgetasteten Zahnrades. Andere Markierungsabschnitte, die bei der ersten Winkelgeschwindigkeit $\omega_1$ eine Abtastzeit aufweisen, die nicht zwischen den Toleranzgrenzen $\Delta t_{1min}$ und $\Delta t_{1max}$ liegt, können ausgeschlossen werden. Es liegt für den Fachmann auf der Hand, dass sich die Abtastzeiten für ein und denselben Markierungsabschnitt verkürzen, wenn die Winkelgeschwindigkeit und damit die Drehzahl des rotierenden Markierungsträgers ansteigen.

Besonders bevorzugt erfolgt mittels der Recheneinheit eine Anpassung des Toleranzbereichs an die Drehzahl der ersten Welle oder an die Winkelbeschleunigung der ersten Welle oder - soweit von der Recheneinheit der Drehwinkel der ersten Welle zu einem Zeitpunkt-X zumindest annähernd bestimmbar ist - an die Position der Welle zum Zeitpunkt-X, das heißt, der Toleranzbereich ist bevorzugt kein konstanter Bereich, sondern dessen Bereichsgrenzen sind bevorzugt eine Funktion der Drehzahl oder eine Funktion der Winkelbeschleunigung oder eine Funktion der Wellenposition, also des Drehwinkels der ersten Welle. Ein Vorteil der Anpassung des Toleranzbereiches an die Wellenposition der ersten Welle kann beispielsweise bei einem Verbrennungsmotor insbesondere dann hervortreten, wenn der Toleranzbereich in einem vordefinierten Drehwinkel-Intervall der Kurbelwelle eines 4-Takt-Ottomotors oder eines 4-Takt-Dieselmotors vorgenommen wird, und beispielsweise in dem Drehwinkel-Bereich von einigen Grad ab dem oberen Totpunkt im dritten Takt des 4-Takt-Motors (Takt der mit der Zündung beginnt) der Toleranzbereich vergrößert wird. Diese Vergrößerung kann vorteilhaft sein, weil in dem dritten Takt, also nach der Zündung - beispielsweise bei Motoren mit einem oder zwei Zylinder/n - mit einer ansteigenden Drehzahl zu rechnen ist. Ähnliches gilt bevorzugt für Motoren mit vier bis sechs Zylindern, die eine leistungsabhängige Zylinderabschaltung aufweisen.

Die Signal-Winkel-Charakteristik weist eine oder mehrere Winkelintervall/e auf, wobei innerhalb des Winkelintervalls oder der Winkelintervalle eine vordefinierte Information des ersten Sensorsignals abtastbar ist, soweit ein vordefinierter Winkelgeschwindigkeitsbereich und/oder ein bestimmter Winkelbeschleunigungsbereich der ersten Welle weder unterschritten noch überschritten wird.

Mittels der Recheneinheit ist bevorzugt eine Signal-Zeit-Charakteristik in eine Signal-Winkel-Charakteristik oder umgekehrt umwandelbar.

Bevorzugt werden die Winkelintervalle, die den Sensorsignalen gemäß einer Weiterbildung der Erfindung zugeordnet werden, von einer sogenannten Winkel-Uhr bereitgestellt, die bevorzugt in der Recheneinheit implementiert ist. Mittels der Winkel-Uhr werden zyklisch aktuelle Winkelwerte oder Winkelintervalle des rotierenden Markierungsträgers bezogen auf einen vordefinierten Null-Grad-Wert berechnet, wobei bevorzugt das Zeitsignal des Zeitgebers der Recheneinheit und/oder eine Winkelgeschwindigkeit und/oder eine Winkelbeschleunigung als Eingangsvariablen der Winkeluhr dienen. Mittels der Winkel-Uhr wird ein Winkel-Uhr-Ausgabewert erzeugt, der dann für weitere Berechnungen der Recheneinheit zur Verfügung steht.

Wird beispielsweise mittels des ersten Sensors ein n-ter Markierungsabschnitt des ersten Markierungsträgers abgetastet, ist mittels der Winkel-Uhr eine Zuordnung des n-ten Markierungsabschnittes zu einer Drehwinkel-Differenz ermöglicht, wobei diese Drehwinkel-Differenz die Differenz des Drehwinkels am Ende des n-ten Markierungsabschnittes abzüglich des Drehwinkels am Anfang des n-ten Markierungsabschnittes ist. Der Betrag dieser Differenz repräsentiert die Größe des Bereichs, der von dem n-ten Markierungsabschnitt eingenommenen wird, oder anders gesagt, die Größe des n-ten Markierungsabschnittes.

Am Beispiel eines ersten Markierungsträgers der bevorzugt als ein Zahnrad ausgestaltet ist, soll das im vorherigen Textabschnitt beschriebene Ausführungsbeispiel der Ermittlung der Größe eines n-ten Markierungsabschnittes weiter verdeutlicht werden. Ist beispielsweise der n-te Markierungsabschnitt ein erster Zahn des Zahnrades, dann erfolgt eine Signal-Winkel-Zuordnung für den ersten Zahn bevorzugt mittels des ersten Sensors und der Winkel-Uhr derart, dass der erste Sensor zum Zeitpunkt des Abtastens des Zahnanfangs des ersten Zahns den zu diesem Zeitpunkt vorliegenden Wert der Winkeluhr in einem Speicherbereich-X zwischenspeichert. Zu einem nachfolgenden Zeitpunkt, also wenn nach der Abtastung des Zahnanfangs des ersten Zahns die Abtastung des Zahn-Endes des ersten Zahns mittels des ersten Sensors erfolgt, wird bevorzugt der Wert der Winkeluhr in einem Speicherbereich-Y zwischengespeichert. Nachfolgend wird bevorzugt mittels der Recheneinheit die folgende Differenz gebildet: Wert aus Speicherbereich-Y abzüglich Wert aus Speicherbereich-X. Das Ergebnis dieser Differenz repräsentiert in dem Beispiel die Größe des ersten Zahnes in Form eines Winkelwertes. Unter der "Größe" eines Zahnes soll im Rahmen der Erfindung der Drehwinkel des Zahnrades verstanden werden, der von diesem Zahn repräsentiert wird. In der Figurenbeschreibung zu Figur 3 wird dieser Zusammenhang im weiteren Text noch ausführlicher dargelegt.

Die Informationen, die von dem ersten Sensorsignal umfasst sind, können je nach Art des ersten Sensors und des ersten Markierungsträgers unterschiedlich ausgestaltet sein. Beispiele für verwendbare Arten eines ersten Sensors sind induktive Näherungsschalter, insbesondere Näherungsschalter, die einen Hall-Sensor umfassen, wobei der von dem induktiven Näherungsschalter abgetastete Markierungsträger bevorzugt metallische Markierungsabschnitte, beispielsweise Stahlzähne eines Zahnrades aufweist.

Das Sensorsignal des ersten Sensors umfasst bevorzugt nur zwei Arten von Signalpegeln, beispielsweise umfassend einen Pegel mit einer logischen "1" und einen Pegel mit einer logischen "0", wobei beispielweise ein erster Pegel von dem ersten Sensor ausgegeben wird, wenn ein Stahlzahn eines Zahnrades von dem ersten Sensor erkannt wird, und ein zweiter Pegel der von dem ersten Sensor ausgegeben wird, wenn eine Zahnlücke eines Zahnrades von dem ersten Sensor erkannt wird.

In einer alternativen Weiterbildung der Erfindung ist vorgesehen, dass der erste Sensor eine Bus-Schnittstelle, beispielsweise eine CAN-Bus-Schnittstelle, aufweist, womit es für diese Weiterbildung der Erfindung erforderlich ist, dass der Sensorsignal-Eingang der Recheneinheit ebenfalls eine Bus-Schnittstelle aufweist, und das erste Sensorsignal Bus-Botschaften umfasst, die beispielsweise bei einer Änderung des Drehwinkels des ersten Markierungsträgers und dem gleichzeitigen "Passieren" der Markierungen bzw. Markierungsabschnitte des ersten Markierungsträgers am ersten Sensor eine Information darüber aufweisen, ob die jeweilige/n Markierung/en bzw. der/die jeweilige/n Markierungsabschnitt/e von dem ersten Sensor abgetastet wurden.

Weitere Ausgestaltungen der Erfindung können vorsehen, dass der erste Sensor einen integrierten Zeitgeber aufweist und/oder dass der Sensorsignal-Eingang als bidirektionale Bus-Schnittstelle ausgestaltet ist, die das erste Sensorsignal mittels Bus-Botschaften empfängt. Dabei ist bevorzugt vorgesehen, dass ein Zeitsignal mittels Bus-Botschaften vom ersten Sensor an den Sensorsignaleingang und/oder vom Sensorsignal-Eingang an den ersten Sensor - beispielsweise zu Synchronisationszwecken - übertragen wird. Soweit gemäß einer weiteren Ausgestaltung der Erfindung ein "intelligenter" erster Sensor mit einer Bus-Schnittstelle verwendet wird, und dem ersten Sensor zudem ein geeignetes Zeitsignal zur Verfügung steht, ist es technisch ermöglicht, dass das erste Sensorsignal in Form von Busbotschaften an den Sensorsignal-Eingang übertragen wird, wobei die Busbotschaften, die die von dem ersten Sensor erkannten Markierungen bzw. Markierungsabschnitte des ersten Markierungsträgers zusammen mit der jeweils zugehörigen Zeitinformation umfassen, an den Sensorsignal-Eingang übertragen werden.

Ein Vorteil des erfindungsgemäßen Verfahrens ist es, dass je nach Ausgestaltung des ersten Markierungsträger die Zeitdauer, die zur Erfassung eines Drehwinkels eines Motors benötigt wird, variabel verkürzbar ist.

Ein weiterer Vorteil des erfindungsgemäßen Verfahrens ist, dass dieses Verfahren vergleichsweise unkompliziert an unterschiedliche Arten von Markierungsträgern anpassbar ist.

Daraus ergibt sich insbesondere der weitere Vorteil, dass das erfindungsgemäße Verfahren universeller einsetzbar und/oder kostengünstiger realisierbar ist, als das eingangs angeführte Verfahren von G. Emerson und Mitverfassern aus dem Stand der Technik. Die Erfindung und deren Weiterbildungen sind besonders vorteilhaft verwendbar im Anwendungsfeld des Motor-Steuergeräte-Prototypentests, weil beispielsweise Testingenieure, die in diesem Bereich tätig sind, in die Lage versetzt werden, die Testumgebung mittels der Erfindung schneller und einfacher an unterschiedliche Motoren, die in der Regel mit unterschiedlichen Markierungsträgern ausgestattet sind, anzupassen.

Ein Vorteil des erfindungsgemäßen Verfahrens gegenüber dem Verfahren zur Drehwinkel-Erfassung mittels eines Rotations-Encoders aus dem eingangs genannten Stand der Technik (WIKIPEDIA-Dokument) ist, dass mittels der Erfindung sich viele Anwendungen kostengünstiger realisieren lassen, insbesondere weil es bei der Erfindung nicht erforderlich ist, eine parallele Abtastung mehrerer konzentrischer Ringe, die in Sektoren unterteilt sind, mit mehreren Sensoren gleichzeitig abzutasten.

Gemäß einer bevorzugten Weiterbildung des erfindungsgemäßen Verfahrens ist es vorgesehen, dass die Anzahl ausgeschlossener gespeicherter Markierungsabschnitte von der Recheneinheit auf null zurückgesetzt wird, nachdem mittels der Recheneinheit die Zuordnung des ersten Drehwinkels zu dem nicht ausgeschlossenen gespeicherten Markierungsabschnitt ausgeführt wurde, und weiter nachfolgend die Verfahrensschritte nach Anspruch 1 erneut ausgeführt werden. Diese Weiterbildung der Erfindung hat den Vorteil, dass eventuelle Berechnungsfehler der Recheneinheit, die beispielsweise durch eine Signalstörung des ersten Sensorsignals hervorgerufen werden kann, die weitere Bestimmung des Drehwinkels der ersten Welle nicht beeinflusst. Die weitere Berechnung erfolgt also gemäß dieser Weiterbildung der Erfindung ohne alte Berechnungsergebnisse.

Eine andere Ausführungsform der Erfindung zeichnet sich dadurch aus, dass nachdem mittels der Recheneinheit die Zuordnung des ersten Drehwinkels zu dem nicht ausgeschlossenen gespeicherten Markierungsabschnitt ausgeführt wurde, mittels der Recheneinheit die in Drehrichtung des ersten Markierungsträgers von dem ersten Sensor abgetasteten Markierungsabschnitte gezählt werden, und nachfolgend mittels der Recheneinheit eine weitere Zuordnung der gezählten abgetasteten Markierungsabschnitte zu dem ersten Drehwinkel vorgenommen wird, und gemäß der weiteren Zuordnung der erste Drehwinkel aktualisiert wird.

In einer Weiterbildung der Erfindung wird das Zählen der vom ersten Sensor abgetasteten Markierungsabschnitte von der Recheneinheit unterbrochen, und nachfolgend erneut die Verfahrensschritte nach Anspruch 1 ausgeführt.

Gemäß einer anderen Weiterbildung des erfindungsgemäßen Verfahrens weist die Recheneinheit ein Schieberegister auf, wobei das Schieberegister eine Reihenschaltung von Schieberegister-Speicher-Elementen aufweist, wobei das Schieberegister Repräsentanzen der gespeicherten Markierungsabschnitte mittels der Schieberegister-Speicher-Elemente speichert, und wobei nachdem mittels der Recheneinheit der erste Drehwinkel von dem nicht ausgeschlossenen gespeicherten Markierungsabschnitt abgeleitet wurde, mittels der Recheneinheit bei jedem in Drehrichtung des ersten Markierungsträgers von dem ersten Sensor abgetasteten Markierungsabschnitt ein Schiebeschritt am Schieberegister ausgeführt wird, wobei der Schiebeschritt ein Fortschreiten der Repräsentanzen der gespeicherten Markierungsabschnitte von einem Schieberegister-Speicher-Element zu dem in der Reihenschaltung nachfolgenden Schieberegister-Speicher-Element umfasst.

Eine weitere Ausführungsform der Erfindung sieht einen zweiter Sensor vor, der mit dem Sensorsignal-Eingang verbunden ist, wobei mittels des zweiten Sensors, eine sich zyklisch ändernde Eigenschaft des Motors oder ein vom Motor beeinflusster Parameter abgetastet wird.

Falls das erfindungsgemäße Verfahren beispielsweise zur Erfassung eines ersten Drehwinkels einer ersten Welle eines Verbrennungsmotors angewendet wird, ist es bevorzugt, dass die sich zyklisch ändernde Eigenschaft des Motors entweder der Zylinderinnendruck des Verbrennungsmotors oder die Stellung der Nockenwelle ist.

In einer vorteilhaften Variante der Erfindung ist ein zweiter Markierungsträger mit einem zweiten Markierungsmuster auf einer zweiten Welle vorgesehen, wobei die zweite Welle und der zweite Markierungsträger von der ersten Welle in eine Rotationsbewegung versetzt werden, und wobei ein zweiter Sensor vorgesehen ist und der zweite Sensor mit dem Sensorsignal-Eingang verbunden ist, wobei mittels des zweiten Sensors, mit dem der zweite Markierungsträger abgetastet wird, ein zweites Sensorsignal erzeugt wird, wobei das zweite Sensorsignal mittels des zweiten Sensors moduliert wird, wenn mit dem zweiten Sensor eine vordefinierte Lageänderung des zweiten Markierungsträgers abgetastet wird. Dabei wird es als besonders vorteilhaft angesehen, wenn das zweite Sensorsignal des zweitens Sensors von der Recheneinheit ausgewertet wird, und das zweite Sensorsignal eine Information zur Unterscheidung zwischen einer geradzahligen bzw. einer ungeradzahligen Umdrehung der ersten Welle ab einem vordefinierten Nullpunkt des ersten Drehwinkels der ersten Welle aufweist.

In einer weiteren Ausführungsform wird das zweite Sensorsignal von der Recheneinheit ausgewertet, und es weist das zweite Sensorsignal eine Information zur Unterscheidung der Takte eines Ottomotors oder Dieselmotors auf.

In bevorzugten Variante der Erfindung bei der ein zweiter Sensor mit einem zweiten Sensorsignal verwendet wird, ist vorgesehen, dass das erste Sensorsignal mit dem zweiten Sensorsignal zu einem kombinierten Sensorsignal, umfassend die Informationen des ersten und des zweiten Sensorsignals, zusammengefasst wird.

In einer anderen Weiterbildung der Erfindung sind die in der Speichereinheit gespeicherten Markierungsabschnitte in komprimierter Form gespeichert.

Besonders bevorzugt ist es, wenn in dem Verfahren die aus dem ersten Sensorsignal zurück gewonnenen Markierungsabschnitte und die gespeicherten Markierungsabschnitte von der Recheneinheit bei der Ermittlung eines ersten Ausschlusskriteriums und/oder eines weiteren Ausschlusskriteriums in komprimierter Form verwendet werden. Besonders vorteilhaft ist die Verwendung der komprimierten Form der gespeicherten Markierungsabschnitte und der zurück gewonnenen Markierungsabschnitte insbesondere bei knappen Ressourcen der Recheneinheit, beispielsweise der Speicherplatzressourcen, da insbesondere redundante Informationen über die mittels Sensor zurückgewonnenen Markierungsabschnitte des Markierungsträgers nicht oder nur teilweise abgespeichert werden und somit Speicherplatz gespart wird und/oder bei der Ermittlung eines Ausschlusskriteriums zum Ausschließen eines gespeicherten Markierungsabschnittes weniger Ressourcen der Recheneinheit benötigt werden, als es ohne die Verwendung einer komprimierten Form der gespeicherten Markierungsabschnitte und einer komprimierten Form der zurück gewonnenen Markierungsabschnitte nötig gewesen wäre.

In einer Weiterbildung der Erfindung sind die gespeicherten Markierungsabschnitte mit unterschiedlich hohen Prioritäten attribuiert, und von der Recheneinheit werden bei der Ermittlung des Ausschlusskriteriums die gespeicherten Markierungsabschnitte in einer Reihenfolge, die durch die Höhe der Prioritäten bestimmt sind, verwendet.

Am Beispiel einer Kurbelwelle eines Ottomotor oder eines Dieselmotors, in diesem Beispiel zusammenfassend als Verbrennungsmotor bezeichnet, soll im nachfolgenden Text die Verwendung von Prioritäten gemäß der Weiterbildung der Erfindung näher beschrieben werden: Der erste Markierungsträger ist beispielsweise direkt und konzentrisch an der Kurbelwelle des Verbrennungsmotors angebracht. Zunächst befindet sich der Verbrennungsmotor in einem Ruhezustand, das heißt, der Verbrennungsmotor ist zunächst abgeschaltet. Im abgeschalteten Zustand nehmen die Kolben des Verbrennungsmotors bevorzugte Positionen ein. Andere Positionen der Kurbelwelle sind im Ruhezustand des Verbrennungsmotors vergleichsweise unwahrscheinlich, da beispielsweise in den unwahrscheinlichen Positionen der Zylinderinnendruck derart erhöht ist, dass die Kolben des Verbrennungsmotors in eine andere Position streben, soweit keine Kräfte auf die Kurbelwelle wirken, die den Übergang der Kolben in eine Position mit geringerem Zylinderinnendruck verhindern. Den unwahrscheinlichen Positionen der Kurbelwelle und folglich den zugehörigen beim Kaltstart unwahrscheinlichen gespeicherten Markierungsabschnitten werden beispielsweise niedrige Prioritäten zugeordnet. In den ersten Millisekunden des Kaltstartvorgangs des Verbrennungsmotors werden folglich in dieser Weiterbildung der Erfindung die gespeicherten Markierungsabschnitte, denen die niedrigsten Prioritäten zugeordnet wurden, zuletzt für den Vergleich mit den von dem ersten Sensor zurückgewonnenen Markierungsabschnitten herangezogen.

Gemäß einer weiteren vorteilhaften Ausgestaltung der Erfindung ist in der Speichereinheit die Reihenfolge der Markierungsabschnitte des ersten Markierungsträgers, entsprechend der Reihenfolge der Annäherung der Markierungsabschnitte des ersten Markierungsträgers an den ersten Sensor bei drehender Welle, gespeichert, und mittels der Recheneinheit wird ein Plausibilitätstest derart ausgeführt, dass die gespeicherte Reihenfolge der Markierungsabschnitte des ersten Markierungsträgers mit einer per Abtastung durch den ersten Sensor ermittelten Reihenfolge der Markierungsabschnitte des ersten Markierungsträgers von der Recheneinheit verglichen wird, und wobei von der Recheneinheit im Falle einer Feststellung einer Abweichung der gespeicherten Reihenfolge der Markierungsabschnitte des ersten Markierungsträgers einerseits von der mit der per Abtastung ermittelten Reihenfolge der Markierungsabschnitte des ersten Markierungsträgers andererseits, ein Fehlerzustand signalisiert wird.

Falls dieser Fehlerzustand signalisiert wird, kann optional beispielsweise eine zusätzliche Weiterbildung der Erfindung mittels der Recheneinheit eingerichtet sein, die den Markierungsabschnitt, der mittels des vorbeschriebenen Plausibilitätstests als fehlerhaft erkannt wurde, ersetzt durch den, gemäß der gespeicherter Reihenfolge der Markie-

EP 2 587 225 B1

rungsabschnitte, zu erwartenden Markierungsabschnitt, der zurückgewonnen worden wäre, wenn der Fehlerzustand nicht eingetreten wäre.

In einer Ausführungsform ist es bevorzugt, dass mittels des ersten Sensors eine Änderung einer kapazitiven, einer induktiven, eine optischen und/oder einer mechanischen Eigenschaft des ersten Markierungsträgers abgetastet wird.

Gemäß eines Ausführungsbeispiels der Erfindung wird der erste Drehwinkel in vordefinierten Zeitabständen oder zu Zeitpunkten, in denen eine vordefinierte Anzahl von Markierungsabschnitten von dem ersten Sensor abgetastet wurde, jeweils aktualisiert von der Recheneinheit an eine Regelvorrichtung des Motors übermittelt.

In einer besonders bevorzugten Ausgestaltung des erfindungsgemäßen Verfahrens wird zumindest ein gespeicherter Markierungsabschnitt mit einem Toleranzbereich versehen, wobei der Wertebereich des gespeicherten Markierungsabschnittes um den Toleranzbereich erweitert wird.

Hierbei wird es als besonders vorteilhaft angesehen, wenn der Toleranzbereich variable Bereichsgrenzen aufweist, wobei die Bereichsgrenzen eine Funktion der Drehzahl der ersten Welle ist oder eine Funktion der Winkelbeschleunigung der ersten Welle ist oder eine Funktion des der ersten Welle zugeordneten Drehwinkels ist, der vor der Berechnung der Bereichsgrenzen von der Recheneinheit ermittelt wird.

In einer besonders bevorzugten Ausführungsform des erfindungsgemäßen Verfahrens ist die erste Welle eine Kurbelwelle eines Verbrennungsmotors.

Gemäß einer weiteren Ausgestaltung ist die zweite Welle eine Nockenwelle eines Verbrennungsmotors.

Es sei angemerkt, dass bevorzugt in der Ausführungsform, in der die zweite Welle eine Nockenwelle ist, die Nockenwelle via Kraftübertragungsmittel, beispielsweise Zahnriemen, Zahnräder oder Kette, mit der ersten Welle verbunden ist. Somit besteht, abgesehen von Ausführungsformen mit Motoren mit sogenannter Nockenwellenverstellung, im Wesentlichen eine Proportionalität zwischen dem Drehwinkel der ersten Welle und dem Drehwinkel der Nockenwelle. Falls eine Nockenwellenverstellung vorgesehen ist, kann eine lineare oder eine nicht-lineare mathematische Abhängigkeit zwischen dem Drehwinkel der ersten Welle und dem Drehwinkel der Nockenwelle bei jeweils vorgegebenem Verstellwinkel der Nockenwelle vorliegen. Es sei ergänzend verwiesen auf Veröffentlichungen zum Prinzip der Nockenwellenverstellung, insbesondere in der Patentanmeldung DE 2825316 A1.

Dieses Schriftstück offenbart einerseits ein erfindungsgemäßen Verfahren zur Erfassung eines ersten Drehwinkels einer ersten Welle eines Motors und andererseits eine erfinderische Vorrichtung zur Ausführung des erfindungsgemäßen Verfahrens sowie zur Ausführung der Weiterbildungen des erfindungsgemäßen Verfahrens, wobei

- ein erster Markierungsträger mit sensorlesbaren Markierungen vorgesehen ist, wobei mittels der Markierungen ein erstes Markierungsmuster ausgebildet ist,
- das erste Markierungsmuster Markierungsabschnitte, umfassend zumindest einen ersten Markierungsabschnitt und einen zweiten Markierungsabschnitt, aufweist,
- der erste Markierungsträger von der ersten Welle in eine Rotationsbewegung versetzbar ist,
- und eine Proportionalität zwischen dem Drehwinkel der ersten Welle und dem Drehwinkel des ersten Markierungsträgers besteht,

mittels eines ersten Sensors der erste Markierungsträger abtastbar ist und von dem ersten Sensor ein erstes Sensorsignal während des Abtastens erzeugbar ist, wobei das erste Sensorsignal mittels der Markierungen auf dem ersten Markierungsträger modulierbar ist, und wobei eine Recheneinheit vorgesehen ist, aufweisend

- eine Speichereinheit mit einem Speicherbereich mit gespeicherten Markierungsabschnitten, umfassend zumindest einen ersten gespeicherten Markierungsabschnitt und einen zweiten gespeicherten Markierungsabschnitt,
- einen Sensorsignal-Eingang,
- einen Zeitgeber mit einem Zeitsignal,

wobei mittels der Recheneinheit eine Zuordnung zwischen einem zeitlichen Verlauf des ersten Sensorsignals und dem Zeitsignal durchführbar ist, und wobei mittels der Recheneinheit folgende Verfahrensschritte ausführbar sind:

a) ein erster Markierungsabschnitt wird aus dem ersten Sensorsignal zurück gewonnen, und nachfolgend
b) aus dem zurückgewonnenen ersten Markierungsabschnitt wird ein erstes Ausschlusskriterium zum Ausschließen des ersten gespeicherten Markierungsabschnittes ermittelt, und nachfolgend
c) mittels des ersten Ausschlusskriteriums wird der erste gespeicherte Markierungsabschnitt ausgeschlossen, und nachfolgend
d) es wird überprüft, ob eine Differenz einer Gesamtanzahl der gespeicherter Markierungsabschnitte abzüglich einer Anzahl ausgeschlossener gespeicherter Markierungsabschnitte gleich eins ist und es wird übergegangen zu Verfahrensschritt g) falls die Differenz gleich 1 ist, es wird übergegangen zu Verfahrensschritt e) falls die Differenz größer eins ist,

e) es wird ein weiterer Markierungsabschnitt aus dem ersten Sensorsignal zurück gewonnen, es wird ein weiteres Ausschlusskriterium ermittelt, es wird mittels des weiteren Ausschlusskriteriums ein weiterer gespeicherter Markierungsabschnitt ausgeschlossen, und nachfolgend

f) der Verfahrensschritt d) wird erneut ausgeführt,

g) aus dem nicht ausgeschlossenen gespeicherten Markierungsabschnitt wird der erste Drehwinkel abgeleitet.

Figurenbeschreibung:

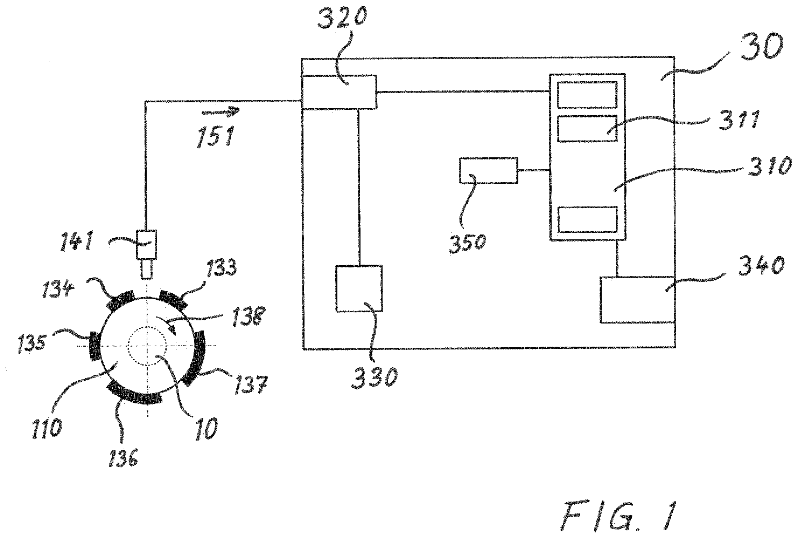

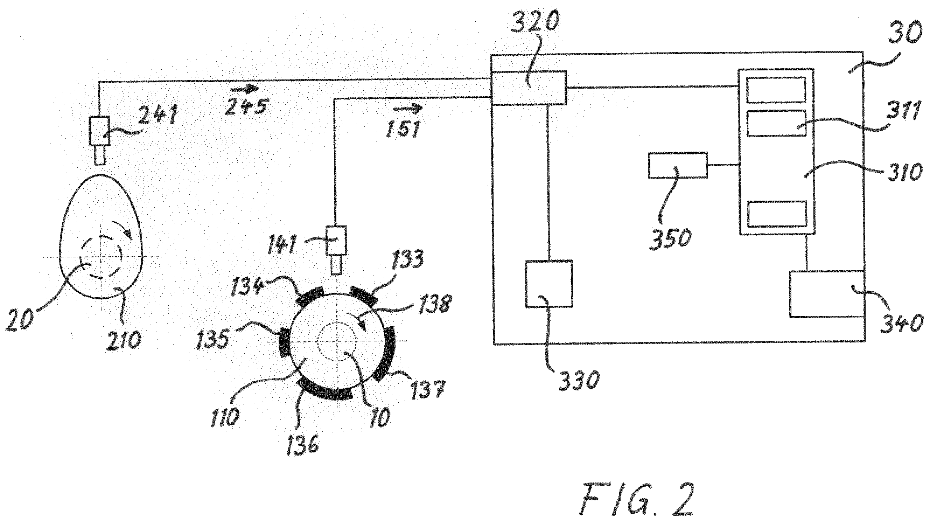

Die Erfindung wird nachfolgend unter Bezugnahme auf die Zeichnungen näher erläutert. Hierbei werden gleichartige Teile mit identischen Bezeichnungen beschriftet. Die in den Figuren dargestellten beispielhaften Ausführungsformen sind stark schematisiert. Insbesondere die Recheneinheit 30 ist in den Figuren 1 und 2 als ein Modul gezeichnet, wobei aber gemäß eines Ausführungsbeispiels die Recheneinheit 30 physikalisch auf mehrere Module und/oder elektronische Schaltungen verteilbar ist.

Es zeigen die:

Figur 1        eine schematische Darstellung einer bevorzugten Ausführungsform einer Vorrichtung, mit der das erfindungsgemäße Verfahren ausgeführt wird;

Figur 2        eine schematische Darstellung einer weiteren bevorzugten Ausführungsform einer Vorrichtung, die zusätzlich zu den Bestandteilen der Figur 1 einen zweiten Sensor 241, einen zweiten Markierungsträger 210 und eine zweite Welle 20 aufweist;

Figur 3        in einer schematischen Darstellung Details einer beispielhaften Ausführungsform eines ersten Markierungsträgers 110 sowie eine Ausführungsform des ersten Sensors 141, der bevorzugt den ersten Markierungsträger 110 berührungslos abtastet;

Figuren 4A bis 4D      einen beispielhaften Verlauf einer Erfassung eines Drehwinkels eines Ausführungsbeispiels eines ersten Markierungsträgers 110, der in dem dargestellten Ausführungsbeispiel konzentrisch mit der ersten Welle 10 verbunden ist. Der beispielhafte Verlauf ist dargestellt in Form von vier Momentaufnahmen (4A, 4B, 4C, 4D) der relativen Anordnung von dem ersten Sensor 141 zu dem ersten Markierungsträger 110 im Verlauf der Rotation des ersten Markierungsträgers 110 in Rotationsrichtung gemäß des Pfeils 138.

Gemäß der Figur 1 weist die Ausführungsform einer Vorrichtung zur Erfassung eines ersten Drehwinkels einer ersten Welle 10 eines Motors einen erster Markierungsträger 110 mit sensorlesbaren Markierungen auf, die in Figur 1 beispielhaft als Zähne 133, 134, 135, 136, 137 ausgeführt sind, wobei diese Markierungen 133 bis 137 ein erstes Markierungsmuster ausbilden.
Das erste Markierungsmuster umfasst in der Ausführungsform mehrere Markierungsabschnitte, die in dem Ausführungsbeispiel jeweils zumindest einen Zahn 133 bis 137 aufweisen.

Der erste Markierungsträger 110 wird von der ersten Welle 10 in eine Rotationsbewegung versetzt, wobei die Rotation der ersten Welle 10 beispielhaft in Uhrzeigerrichtung verläuft, was durch den gekrümmten Pfeil 138 an der ersten Welle 10 angedeutet ist. Da in der Ausführungsform der erste Markierungsträger 110 mit der ersten Welle 10 verbunden ist, und der erste Markierungsträger 110 und die erste Welle 10 konzentrisch angeordnet sind, ist der Drehwinkel der ersten Welle 10 und der Drehwinkel des ersten Markierungsträgers 110 identisch.
Mittels des ersten Sensors 141 wird der erste Markierungsträger 110 abgetastet und von dem ersten Sensor 141 wird ein erstes Sensorsignal 151 während des Abtastens erzeugt, wobei das erste Sensorsignal 151 mittels der Markierungen 133 bis 137 auf dem ersten Markierungsträger 110 moduliert wird.

Der Sensorsignal-Eingang 320 ist als Schnittstelle der Recheneinheit vorgesehen und eingerichtet, um das erste Sensorsignal 151 des ersten Sensors 141 in die Recheneinheit 30 zu übernehmen. Von dem Sensorsignal-Eingang 320 aus erfolgt die Weiterleitung der von dem ersten Sensor 141 bereitgestellten Informationen zu den informationsverarbeitenden Komponenten (nicht vollständig dargestellt) der Recheneinheit 30. Insbesondere erfolgt mittels der Recheneinheit 30 eine Zuordnung des ersten Sensorsignals 151 mit dem Zeitsignal (nicht dargestellt) des Zeitgebers 330.

Die in Figur 1 schematisch dargestellte Recheneinheit 30 weist eine Speichereinheit 310 mit einem Speicherbereich 311 mit gespeicherten Markierungsabschnitten, umfassend zumindest einen ersten gespeicherten Markierungsabschnitt und einen zweiten gespeicherten Markierungsabschnitt auf.

Desweiteren weist die Recheneinheit 30 einen Sensorsignal-Eingang 320 und einen Zeitgeber 330 mit einem Zeitsignal auf. Das Zeitsignal des Zeitgebers 330 steht innerhalb der Recheneinheit bevorzugt dafür zur Verfügung, damit dem ersten Sensorsignal 151, das mittels der Markierungen 133 bis 137 des ersten Markierungsträgers 110 moduliert wird, im Verlauf der Abtastung des ersten Markierungsträgers 110 eine jeweils aktuelle Zeitinformation innerhalb der Recheneinheit 30 zugeordnet wird.

In der Beschreibungseinleitung wurde bereits auf den Zusammenhang zwischen Winkelgeschwindigkeit, Winkel und Zeit eingegangen. Soweit innerhalb eines Zeitintervalls die Winkelgeschwindigkeit des ersten Markierungsträgers 110 als näherungsweise konstant und näherungsweise bekannt angenommen werden kann, ist mittels der Recheneinheit 30 eine Zuordnung des Zeitintervalls zu dem Winkel ermöglicht, der im Zeitintervall von dem ersten Markierungsträger 110 zurückgelegt wird oder wurde.

Gemäß der Ausführungsform nach Figur 1 weist die Recheneinheit 30 bevorzugt eine Komprimierungseinheit 350 auf. Die Komprimierungseinheit 350 erfüllt die Aufgabe, redundante bzw. überflüssige Informationen zumindest teilweise zu eliminieren, die den gespeicherten Markierungsabschnitten zum Zeitpunkt der Erfassung anhaften. Eine weitere Funktion der Komprimierungseinheit besteht bevorzugt darin, redundante oder überflüssige Informationen, die bei der Abtastung des ersten Markierungsträgers 110 mittels des ersten Sensors 141 und ggf. bei der Zuordnung des Zeitsignals zum ersten Sensorsignal 151 entstehen, zumindest teilweise zu beseitigen.

Vorteilhaft werden sowohl die gespeicherter Markierungsabschnitte als auch die zurückgewonnener Markierungsabschnitte des ersten Markierungsträgers 110 in komprimierter Form bei der Ausführung des erfindungsgemäßen Verfahrens verwendet.

Falls beispielsweise, wie in Figur 3 dargestellt, der erste Markierungsträger 110 als Zahnrad mit nur zwei Arten von Markierungen, nämlich kleinen Zähnen 133, 134, 135 und großen Zähnen 136, 137 ausgestaltet ist, kann es für die Ermittlung des ersten und der weiteren Ausschlusskriterien ausreichen, dass mittels des ersten Sensors 141 und der damit verbundenen Recheneinheit 30 während der Rotation des ersten Markierungsträgers 110 ermittelt wird, ob zu einem bestimmten Zeitpunkt ein kleiner Zahn oder ein großer Zahn abgetastet wurde. Die Rotationsrichtung der ersten Welle 10 wird in diesem Beispiel durch den gekrümmten Pfeil 138 angezeigt, der oberhalb der ersten Welle eingezeichnet ist. Beispielsweise aus der zeitlichen Abtastreihenfolge der folgenden Zähne in Figur 3 kann auf den Drehwinkel der ersten Welle geschlossen werden: kleiner Zahn, kleiner Zahn, großer Zahn. Das Ende dieser Abtastreihenfolge ist in dem Beispiel gemäß Figur 3 dem Drehwinkel 240 Grad gleichzusetzen. Alle anderen Drehwinkel können zum Zeitpunkt der Feststellung dieser Abtastreihenfolge ausgeschlossen werden. Anhand dieses Beispiels wird deutlich, dass beispielsweise Signal-Zeit-Diagramme des ersten Sensors 141, die bei der Abtastung des ersten Markierungsträgers entstehen, komprimiert werden können. Die komprimierten Informationen umfassen beispielsweise die genannte Abtastreihenfolge, die einen zurückgewonnenen Markierungsabschnitt darstellt. Nach einem Vergleich mit den in der Recheneinheit 30 gespeicherten Markierungsabschnitten, die bevorzugt auch in komprimierter Form vorliegen, kann nach Ausführung des Ausschlussverfahrens gemäß der Erfindung auf den genannten Drehwinkel von 240 Grad geschlossen werden.

In einer beispielhaften Realisierungsform ist die Komprimierungseinheit 350 innerhalb eines FPGA-Bauelementes realisiert.

Das erfindungsgemäße Verfahren setzt voraus, dass die Recheneinheit 30 eine Speichereinheit 310 mit einem Speicherbereich 311 aufweist, wobei die gespeicherten Informationen des Speicherbereichs 311 insbesondere die, in Figur 1 nicht dargestellten, gespeicherten Markierungsabschnitte umfassen.

Gemäß einer Ausführungsform wird mittels der Recheneinheit eine der folgenden beiden Funktionen zur Bereitstellung der gespeicherten Markierungsabschnitte im Speicherbereich 311 der Recheneinheit 30 ausgeführt, bevor das erfindungsgemäße Verfahren ausgeführt wird: Die erste Funktion sieht vor, dass der erste Markierungsträger 110 in einer vordefinierten Winkelgeschwindigkeit in vordefinierter Drehrichtung von der ersten Welle angetrieben wird und gleichzeitig mittels des ersten Sensors und der Recheneinheit eine Signal-Zeit-Charakteristik oder eine Signal-Winkel-Charakteristik des ersten Markierungsträgers abgetastet und "mitgeschrieben" wird.

Die zweite Funktion zur Bereitstellung des gespeicherten Markierungsmusters sieht vor, dass eine Schnittstelle 340 der Recheneinheit 30 vorgesehen ist, und von einer weiteren externen Datenquelle, die in den Figuren nicht dargestellt ist, oder per manueller Eingabe durch den Anwender via der Schnittstelle 340 die Daten an die Speichereinheit 310 der Recheneinheit 30 übertragen werden, wobei diese Daten das gespeicherte Markierungsmuster bilden.

Mittels der Recheneinheit 30 wird eine Zuordnung zwischen einem zeitlichen Verlauf des ersten Sensorsignals 151 und dem Zeitsignal durchgeführt. Desweiteren wird mittels der Recheneinheit 30 ein erster Markierungsabschnitt aus dem ersten Sensorsignal 151 zurück gewonnen, und nachfolgend aus dem zurückgewonnenen ersten Markierungsabschnitt wird ein erstes Ausschlusskriterium zum Ausschließen des ersten gespeicherten Markierungsabschnittes (in Figur 1 nicht dargestellt) ermittelt. Nachfolgend wird mittels des ersten Ausschlusskriteriums der erste gespeicherte Markierungsabschnitt ausgeschlossen. Danach wird überprüft, ob eine Differenz einer Gesamtanzahl der gespeicherter Markierungsabschnitte abzüglich einer Anzahl ausgeschlossener gespeicherter Markierungsabschnitte gleich eins ist und es wird übergegangen zu dem Verfahrensschritt, dass aus dem nicht ausgeschlossenen gespeicherten Markierungsabschnitt der erste Drehwinkel abgeleitet wird, falls die Differenz gleich 1 ist. Falls die Differenz einer Gesamtanzahl der gespeicherter Markierungsabschnitte abzüglich einer Anzahl ausgeschlossener gespeicherter Markierungsabschnitte ungleich eins ist, wird ein weiterer Markierungsabschnitt aus dem ersten Sensorsignal 151 zurück gewonnen, es wird ein weiteres Ausschlusskriterium ermittelt, es wird mittels des weiteren Ausschlusskriteriums ein weiterer gespeicherter Markierungsabschnitt ausgeschlossen. Nachfolgend wird erneut überprüft, ob eine Differenz einer Gesamtanzahl der gespeicherten Markierungsabschnitte abzüglich einer Anzahl ausgeschlossener gespeicherter Markierungsabschnitte gleich eins ist. Falls diese Differenz immer noch ungleich ein ist, werden die Verfahrensschritte aus diesem Absatz solange wiederholt, bis die Differenz gleich 1 ist. Ist die Differenz gleich 1, dann wird aus dem nicht ausgeschlossenen gespeicherten Markierungsabschnitt der erste Drehwinkel abgeleitet.

Ein weiterer Vorteil des Verfahrens besteht darin, dass vorzugsweise keine volle Umdrehung der ersten Welle 10 bzw. des ersten Markierungsträgers 110 notwendig ist, um den Drehwinkel der ersten Welle 10 bzw. des ersten Markierungsträgers 110 nach einem Initialisierungsvorgang zu bestimmen. Beispielsweise bei Verbrennungsmotoren in Kraftfahrzeugen mit einer sogenannten Start-Stop-Automatik besteht insbesondere die Aufgabe, bei jedem Start-Vorgang eine vergleichsweise zeitnahe Erkennung des Drehwinkels der Kurbelwelle zum Zweck der Reduzierung des Kraftstoffverbrauchs zu erzielen. Das erfindungsgemäße Verfahren bietet in diesem beispielhaften Anwendungsfeld eine vorteilhafte Lösung, die einen vergleichsweise kostengünstigen schaltungstechnischen Aufwand erfordert.

Ein weiterer Vorteil des Verfahrens ist die Flexibilität der erfindungsgemäßen Lösung insbesondere für Entwicklungs- und Testsystemhersteller, indem das Verfahren an verschiedenartige Markierungsträger leicht anpassbar ist. Durch die Erfindung lassen sich bevorzugt mit ein- und derselben Vorrichtung die Drehwinkel von Kurbelwellen von Motoren erfassen, wobei die Kurbelwellen der unterschiedlichen Motoren unterschiedliche Arten von Markierungsträger aufweisen.

Es sei angemerkt, dass sich das erfindungsgemäße Verfahren auch in einer virtuellen Umgebung im Rahmen einer Ablaufsimulation eines virtuellen Motors mit virtuellen Bauelementen und folglich auch ein virtueller Markierungsträger und einem virtuellen Sensor anwenden lässt. Mit anderen Worten lassen sich bevorzugt die Ausgangssignale des Motors und / oder des Sensors von einer elektronischen Eingabe-Ausgabe-Schaltungsanordnung bereitstellen. Bevorzugt wirkt eine zweite Recheneinheit, welche ein Simulationsmodell des Motors mit einem Sensor abbildet und mit einer Eingabe-Ausgabe-Schaltungsanordnung zusammen. Hierbei wird das modulierte Signal des Sensors von der Eingabe-Ausgabe-Schaltungsanordnung bereitgestellt, sodass das Ausgangssignal des simulierten ersten Sensors dem Ausgangssignal eines realen ersten Sensors 141 entspricht.

Die Abbildung der Figur 2 zeigt, dass bevorzugt neben dem ersten Sensorsignal 151, ein zweites Sensorsignal für die Recheneinheit bereitgestellt wird. Das zweite Sensorsignal 241 wird gewonnen, indem ein bevorzugt rotierender zweiter Markierungsträger 210 - vorliegend als rotierender Nocken einer Nockenwelle 20 dargestellt - von einem zweiten Sensor 241, der vorzugsweise ein induktiver Näherungsschalter ist, abgetastet wird. Bei vordefinierter Annäherung des Nockens an den zweiten Sensor 241 ändert sich das zweite Sensorsignal 245. Bevorzugt wird mittels des Zeitsignals des Zeitgebers 330 dem zweiten Sensorsignal, insbesondere den Flanken des zweiten Sensorsignals von der Recheneinheit 30 eine Zeitinformation zugeordnet.

Ein Vorteil ist, dass sich bei einer Zuordnung des ersten Markierungsträgers mit einem ersten Markierungsmuster zu einer Kurbelwelle und einer Zuordnung des zweiten Markierungsträgers mit einem zweiten Markierungsmusters zu einer Nockenwelle eine Bestimmung der Nummer des Taktes eines Viertaktmotors, insbesondere nach dem Stillstand des Motors bzw. unmittelbar im Startvorgang des Motors, durchführen lässt. Je nach Anzahl der Zylinder und je nach Ausgestaltung des zweiten Markierungsträgers, der bevorzugt als Nocken der Nockenwelle ausgestaltet ist, und von der Nockenwelle in eine Rotationsbewegung versetzt wird, lässt sich mittels des zweiten Sensors bevorzugt nach der Initialisierung der Regelvorrichtung des Motors, beispielsweise nach dem Aktivieren des Startvorgangs, bspw. per Zündschlüssel oder Startknopf, anhand der Lage des zweiten Markierungsträgers der zweite Drehwinkel der zweiten Welle und damit bevorzugt der Takt des Viertaktmotors bestimmen oder zumindest ein oder mehrere Takte ausschließen. Eine möglichst schnelle Bestimmung der Takte der Zylinder eines Mehrzylinder-Viertakt-Verbrennungsmotors kann erreicht werden, indem jedem Nocken der Nockenwelle ein Sensor zugeordnet wird, denn nach Abtastung eines Nockens kann in der Regel zumindest näherungsweise für alle Zylinder auf den Takt des jeweiligen Zylinders geschlossen werden. Allerdings ist die Drehwinkelbestimmung per Abtastung der Nocken einer Nockenwelle allein genommen für die Zwecke der Regelung des Verbrennungsmotors in der Regel nicht ausreichend, beispielsweise weil die erzielbare Genauigkeit der Drehwinkelbestimmung via Nockenabtastung nicht ausreichend für eine verbrauchsoptimierte Regelung (bzgl. Kraftstoffverbrauch) des Verbrennungsmotors ist. Aus diesem Grund dient das Abtasten des bzw. der Nocken mittels des zweiten Sensors bzw. mittels weiterer Sensoren bevorzugt nur einer Eingrenzung eines Intervalls des Drehwinkels der ersten Welle, beispielsweise zur Feststellung eines Zylinder-Taktes und des zugehörigen Drehwinkel-Intervalls der Kurbelwelle.

Wie bereits ausgeführt, ist unter der "Größe" eines Zahnes im Rahmen der Erfindung der Drehwinkel des Zahnrades zu verstehen, der von diesem Zahn repräsentiert wird.

Im weiteren Text zu der Figur 3 wird dieser Zusammenhang noch ausführlicher dargelegt.

In dem Ausführungsbeispiel gemäß Figur 3 ist der als Zahnrad ausgestaltete erste Markierungsträger 10 mit insgesamt 5 Zähnen ausgestattet, wobei die Zahnlücken zwischen den Zähnen stets eine gleich große Winkelweite nämlich jeweils 30 Grad repräsentieren. Zwar wäre es gemäß der Erfindung ermöglicht, mehrere Markierungen - z. B. mehrere Zähne eines Zahnrades - zu einem Markierungsabschnitt zusammenzufassen, aber bei dem beispielhaften Zahnrad gemäß Figur 3 ist ein Markierungsabschnitt jeweils genau ein Zahn, wobei zwei Arten von Zähnen vorgesehen sind, nämlich 30-Grad-Zähne und 60-Grad-Zähne. Alle konkreten Winkelwerte in diesem Text werden im Gradmaß angegeben, d. h. der Vollwinkel beträgt 360 Grad.

Das in der Figur 3 dargestellte Ausführungsbeispiel eines Markierungsträgers 110 weist einen ersten Zahn 133, eine zweiten Zahn 134, einen dritten Zahn 135 auf, wobei diese drei Zähne jeweils eine Winkelweite von 30 Grad repräsentieren. Der Markierungsträger weist desweiteren einen vierter Zahn 136 und einen fünften Zahn 137 auf, wobei jeder der letztgenannten Zähne eine Winkelweite von jeweils 60 Grad repräsentiert. Nach jedem Zahn folgt jeweils eine Zahnlücke, die eine Winkelweite von jeweils 30 Grad repräsentiert.

Der Drehwinkel der Welle ergibt sich aus der Addition der von dem ersten Sensor abgetasteten Winkelweiten der Zähne und Zahnlücken.

Je nach Ausführungsform des ersten Sensors 141 kann vorgesehen sein, dass von dem ersten Sensor lediglich bei der Abtastung der Anfänge der Zähne und der Enden der Zähne eine entsprechende Information an die Recheneinheit 30 übermittelt wird. Weitere Ausführungsformen des ersten und/oder zweiten Sensors 141, 241 können derart ausgestaltet sein, dass nur die Informationen über abgetastete Zahnanfänge oder nur über abgetastete Zahn-enden vom ersten Sensor an die Recheneinheit übermittelt werden. Im vorliegenden Ausführungsbeispiel wird jeder Zahnanfang und jedes Zahnende vom ersten Sensor abgetastet und im Wesentlichen ohne eine zu berücksichtigende Zeitverzögerung an die Recheneinheit übermittelt.

Die erste Welle 10, die in Figur 3 als gestrichelter Innenkreis innerhalb der Markierungsträgers 110 eingezeichnet ist, und der erste Markierungsträger 110 sind konzentrisch angeordnet und miteinander verbunden, so dass der Drehwinkel der ersten Welle 10 zwangsläufig identisch mit dem Drehwinkel des ersten Markierungsträgers 110 ist. Die Null-Grad-Position der Welle - in Figur 3 mit "0°" markiert - ist in diesem Beispiel festgelegt auf das in dieser Figur 3 dargestellte obere Ende des ersten Zahns 133.

Die 30-Grad-Position entspricht dem unteren Ende des ersten Zahns 133.

Folgende Winkelwerte repräsentieren die Anfänge und Enden der fünf Zähne des Markierungsträgers 110, der in Figur 3 beispielhaft als Zahnrad ausgestaltet ist:

- Erster Zahn 133: Der Zahnanfang repräsentiert 0°, das Zahnende 30°;
- Zweiter Zahn 134: Der Zahnanfang repräsentiert 60°, das Zahnende 90°;
- Dritter Zahn 135: Der Zahnanfang repräsentiert 120°, das Zahnende 150°;
- Vierter Zahn 136: Der Zahnanfang repräsentiert 180°, das Zahnende 240°;
- Fünfter Zahn 137: Der Zahnanfang repräsentiert 270°, das Zahnende 330°.

Zwischen den Zähnen weist der Markierungsträger 110 jeweils eine Zahnlücke von 30° auf.

Der Markierungsträger 110 ist vorgesehen und eingerichtet, um in der Rotationsrichtung, die durch den gekrümmten Pfeil 138 angezeigt ist, zu rotieren. Bei der Rotation des Markierungsträgers werden nacheinander pro Voll-Umdrehung alle Zähne nacheinander an dem ersten Sensor 141 entlanggeführt.

Mittels des ersten Sensors 141 werden Zahnanfänge und Zahnenden aller Zähne der Markierungsträgers 110 abgetastet.

Die Winkelgeschwindigkeit der ersten Welle 110 wird in diesem Beispiel als konstant angenommen. In diesem Beispiel liegt der Wert der Winkelgeschwindigkeit in der Recheneinheit gespeichert vor.

Falls, wie in dem Ausführungsbeispiel nach Figur 3 dargestellt, ein Zahn eine Winkelweite von 30 Grad oder 60 Grad repräsentiert, kann folglich eine Drehwinkelbestimmung mittels Markierungsträger-Abtastung durch die mit dem ersten Sensor verbundene Recheneinheit in einer Ausführungsform der Erfindung am Anfang und am Ende der Zähne erfolgen, im Beispiel folglich in 30 Grad- bzw. 60 Grad-Schritten, je nachdem, ob ein kurzer Zahn oder ein langer Zahn abgetastet wird.

Im Falle einer näherungsweise konstanten Winkelgeschwindigkeit des rotierenden Markierungsträgers 110 ist es mittels mathematischer Extrapolation, die bevorzugt auf der Recheneinheit 30 ausführbar ist, ermöglicht, den jeweiligen Drehwinkel des Markierungsträgers 110 und damit der ersten Welle 10 auch während des Passieren des Zahnes näherungsweise weiter zu berechnen. Der per Extrapolation ermittelte Drehwinkel wird bevorzugt von der Recheneinheit 30 unter Einhaltung sogenannten Echtzeitbedingungen an eine in den Figuren nicht dargestellte Regeleinheit des Motors weitergeleitet.

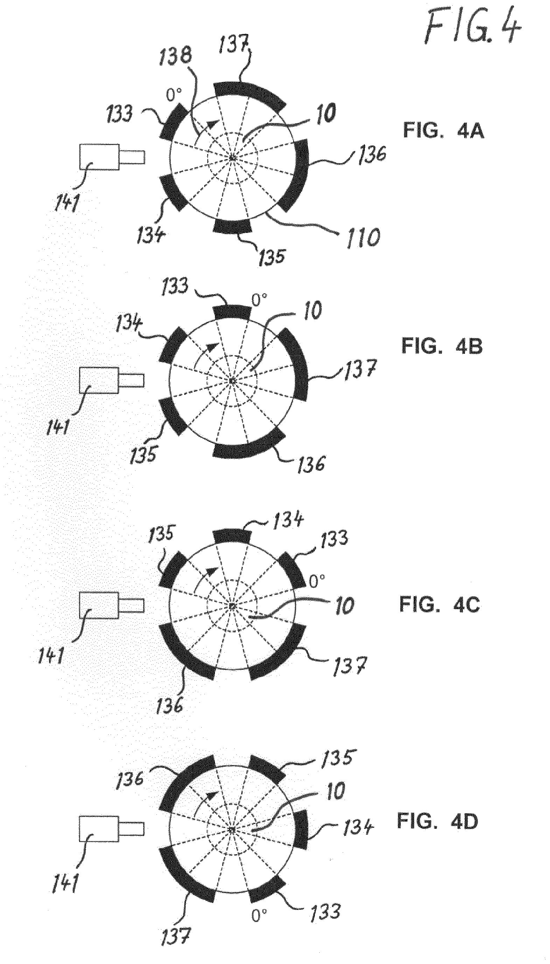

Anhand des Ausführungsbeispiels einer Erfassung eines Drehwinkels eines beispielhaften Markierungsträgers 110 werden nachfolgend anhand der Figuren 4A, 4B, 4C und 4D, die hier graphisch dargestellten und nacheinander zeitlich folgenden Momentaufnahmen des rotierenden Markierungsträgers 110 detailliert dargelegt, insbesondere wird am Beispiel erläutert, wie das Ausschlussverfahren gemäß der Erfindung unter Verwendung eines ersten Markierungsträgers 110 ausgestaltbar ist. Aus Übersichtlichkeitsgründen ist in Figur 4 die Verbindung zwischen erstem Sensor 141 und Sensorsignal-Eingang 320 der Recheneinheit 30 nicht dargestellt. Es versteht sich allerdings von selbst, dass das vom ersten Sensor 141 ausgehende erste Sensorsignal 151 an eine Recheneinheit 30, wie sie in den Figuren 1 und 2 dargestellt ist, weitergeleitet werden muss, damit mittels Auswertung des ersten Sensorsignals 151 von der Recheneinheit 30 ein Drehwinkel des ersten Markierungsträgers 110 und damit ein Drehwinkel der ersten Welle 10 ermittelbar ist.

In diesem Ausführungsbeispiel ist die Winkelgeschwindigkeit der ersten Welle 110 im Wesentlichen konstant und der Wert der Winkelgeschwindigkeit liegt in der Recheneinheit gespeichert vor. Außerdem wird in dem Beispiel vorausgesetzt, dass Zeitverzögerungen, die durch die Signalverarbeitung entstehen, außer Betracht bleiben können, insbesondere solche Zeitverzögerungen, die bei einer Signalerzeugung mittels des ersten Sensors 141, bei der Signalweiterleitung des ersten Sensorsignals 151 zur Recheneinheit 30 und bei der Signalauswertung des ersten Sensorsignals 151 innerhalb der Recheneinheit 30 entstehen.

In Figur 4 ist ein Ausführungsbeispiel eines ersten Markierungsträgers 110 in nacheinander folgenden Momentaufnahmen gemäß der zu Figur 4 gehörenden Detail-Figuren 4A bis 4D in einer bevorzugten Reihenfolge einzelner Phasen der Erfassung des Drehwinkels der ersten Welle 10 dargestellt. Der hier dargestellte erste Markierungsträger ist bevorzugt identisch zu dem ersten Markierungsträger 110 gemäß Ausführungsbeispiel in Figur 3.

Beginnt beispielsweise, wie in Figur 4A dargestellt, nach einer Initialisierung der Recheneinheit die Abtastung des Zahnrades 110, das durch die erste Welle 10 angetrieben wird, mittels des ersten Sensors 141 in der Zahnlücke zwischen dem ersten 30-Grad-Zahn 133 und dem zweiten 30-Grad-Zahn 134, und wird anschließend zunächst der zweite 30-Grad-Zahn 134 abgetastet, so können von der Recheneinheit zunächst nur die 60-Grad-Zähne ausgeschlossen werden, weil die Recheneinheit 30 mittels des ersten Sensorsignals 151, mittels Vergleich mit den gespeicherten Markierungsabschnitten und aufgrund der Abtastdauer bei der Abtastung des zweiten Zahns 134 ermittelt, dass ein 30-Grad-Zahn abgetastet wurde. Die Abtastung des zweiten Zahns 134 ist gemäß Figur 4B bereits vollendet.

Die gespeicherten Markierungsabschnitte weisen in diesem Ausführungsbeispiel gespeicherte Repräsentationen von Reihenfolgen aufeinanderfolgender Zahnarten, hier Reihenfolgen von kurzen Zähnen und/oder langen Zähnen auf.

Es wird ein Ausschlusskriterium für gespeicherte Markierungsabschnitte gebildet. Im vorliegenden Beispiel, zum Zeitpunkt nach Abtastung des zweitens Zahns 134, werden diejenigen gespeicherte Markierungsabschnitte ausgeschlossen, die mit einem 60-Grad-Zahn beginnen. Die Gesamtzahl der gespeicherten Markierungsabschnitte umfasst in dem Ausführungsbeispiel gespeicherte Repräsentierungen von allen Abtastreihenfolgen, die bei dem vorliegenden ersten Markierungsträger, der vorliegenden Rotationsrichtung gemäß Pfeil 138 und der zugehörigen Anordnung des ersten Sensors 141 technisch ermöglicht sind.

Die Differenz zwischen der Gesamtzahl der gespeicherten Markierungsabschnitte abzüglich der Anzahl der ausgeschlossenen gespeicherten Markierungsabschnitte ist zum Zeitpunkt der Momentaufnahme gemäß Figur 4B größer eins. Die Abtastung des Markierungsträgers 110 muss fortgesetzt werden, um dessen Drehwinkel zu bestimmen.

Bereits abgetastete Zähne bzw. deren Art werden und bleiben in der Speichereinheit 310 gespeichert, das heißt die Recheneinheit 30 speichert die "Abtast-Historie" bevorzugt ab dem Initialisierungsvorgang, also die Reihenfolge und Art der bereits abgetasteten Zähne, vorzugsweise vom letzten abgetasteten Zahn bis zu dem Zahn, bei dem die Gesamtzahl der Zähne des ersten Markierungsträgers 110 erreicht ist. Unter den "Arten" der Zähne sind in dem Ausführungsbeispiel gemäß Figur 4 die "langen" Zähne 136, 137 und die "kurzen" Zähne 133, 134, 135 zu verstehen.

In Figur 4B ist die Abtastung des zweiten Zahns 134 beendet und es folgt danach die Abtastung des dritten Zahns 135.

Wie in Figur 4C schematisch dargestellt, ist in der dargestellten Momentaufnahme der dritte Zahn 135 abgetastet. Mittels der Recheneinheit 30, in der die gespeicherte Abtast-Historie vorliegt, werden alle Markierungsabschnitte ausgeschlossen, die nicht mit zwei kurzen Zähnen nacheinander beginnen. Dennoch ist die Differenz zwischen der Gesamtzahl der gespeicherten Markierungsabschnitte abzüglich der Anzahl der ausgeschlossenen gespeicherten Markierungsabschnitte immer noch größer eins. Die Abtastung des Markierungsträgers 110 muss fortgesetzt werden, um dessen Drehwinkel zu bestimmen.

Aus Figur 4D geht hervor, dass mittels des ersten Sensors 141 die Abtastung des vierten Zahnes 136 abgeschlossen ist. Nach Abschluss der Abtastung des vierten Zahnes 136 liegt in der Speichereinheit 310 der Recheneinheit 30 folgende Abtast-Historie in folgender Reihenfolge gespeichert vor: kurzer Zahn, kurzer Zahn, langer Zahn. Mittels dieser Abtast-Historie, die in der Recheneinheit 30 verwendet wird, um ein weiteres Ausschlusskriterium zu ermitteln, können damit alle gespeicherten Markierungsabschnitte ausgeschlossen werden, die nicht dieser letztgenannten Abtast-Historie entsprechen. Im vorliegenden Beispiel bleibt genau ein gespeicherter Markierungsabschnitt übrig, der nicht von dem jetzt vorliegenden Ausschlusskriterium erfasst wird, denn nach drei abgetasteten Zähnen und bei dem Vorliegen der letztgenannten Abtast-Historie, kann sicher darauf geschlossen werde, dass der letzte zu diesem Zeitpunkt vom ersten Sensor 141 erfasste Zahn der vierte Zahn 136 ist. Damit kann der Drehwinkel der ersten Welle zum Zeitpunkt der Abtastung des Zahn-Endpunktes des vierten Zahns 136 abgeleitet werden, der im vorliegenden Beispiel 240° beträgt, wie in Figur 3 ersichtlich.

Dem Fachmann ist es in Kenntnis der Erfindung ermöglicht, viele Abwandlungen der dargestellten Ausführungsbeispiele bereitzustellen. Insbesondere ist die Erfindung unter Verwendung verschiedener Markierungsträger einsetzbar.

**Patentansprüche**

1. Verfahren zur Erfassung eines ersten Drehwinkels einer ersten Welle (10) eines Motors, wobei

   - ein erster Markierungsträger (110) mit sensorlesbaren Markierungen (133, 134, 135, 136, 137) vorgesehen ist, wobei die Markierungen (133, 134, 135, 136, 137) ein erstes Markierungsmuster ausbilden,
   - das erste Markierungsmuster Markierungsabschnitte, umfassend zumindest einen ersten Markierungsabschnitt und einen zweiten Markierungsabschnitt, aufweist,
   - der erste Markierungsträger (110) von der ersten Welle (10) in eine Rotationsbewegung versetzt wird,
   - und eine Proportionalität zwischen dem Drehwinkel der ersten Welle (10) und dem Drehwinkel des ersten Markierungsträgers (110) besteht,

   mittels eines ersten Sensors (141) der erste Markierungsträger (110) abgetastet wird und von dem ersten Sensor (141) ein erstes Sensorsignal (151) während des Abtastens erzeugt wird, wobei das erste Sensorsignal (151) mittels der Markierungen (133, 134, 135, 136, 137) auf dem ersten Markierungsträger (110) moduliert wird, und wobei zumindest für einen Teil einer Umdrehung eine Winkelgeschwindigkeit der ersten Welle bekannt oder abschätzbar ist und näherungsweise als konstant anzusehen ist, und wobei
   eine Recheneinheit (30) vorgesehen ist, aufweisend

   - eine Speichereinheit (310) mit einem Speicherbereich (311) mit gespeicherten Markierungsabschnitten, umfassend zumindest einen ersten gespeicherten Markierungsabschnitt und einen zweiten gespeicherten Markierungsabschnitt,
   - einen Sensorsignal-Eingang (320),
   - einen Zeitgeber (330) mit einem Zeitsignal,

   wobei mittels der Recheneinheit (30) eine Zuordnung zwischen einem zeitlichen Verlauf des ersten Sensorsignals (151) und dem Zeitsignal durchgeführt wird, und wobei
   mittels der Recheneinheit (30) folgende Verfahrensschritte ausgeführt werden:

   a) ein erster Markierungsabschnitt wird aus dem ersten Sensorsignal (151) zurück gewonnen, und nachfolgend
   b) aus dem zurückgewonnenen ersten Markierungsabschnitt wird ein erstes Ausschlusskriterium zum Ausschließen des ersten gespeicherten Markierungsabschnittes ermittelt, und nachfolgend
   c) mittels des ersten Ausschlusskriteriums wird der erste gespeicherte Markierungsabschnitt ausgeschlossen, und nachfolgend
   d) es wird überprüft, ob eine Differenz einer Gesamtanzahl der gespeicherter Markierungsabschnitte abzüglich einer Anzahl ausgeschlossener gespeicherter Markierungsabschnitte gleich eins ist und es wird übergegangen zu Verfahrensschritt g) falls die Differenz gleich 1 ist, es wird übergegangen zu Verfahrensschritt e) falls die Differenz größer eins ist,
   e) es wird ein weiterer Markierungsabschnitt aus dem ersten Sensorsignal (151) zurück gewonnen, es wird ein weiteres Ausschlusskriterium ermittelt, es wird mittels des weiteren Ausschlusskriteriums ein weiterer gespeicherter Markierungsabschnitt ausgeschlossen, und nachfolgend
   f) der Verfahrensschritt d) wird erneut ausgeführt,
   g) aus dem nicht ausgeschlossenen gespeicherten Markierungsabschnitt wird der erste Drehwinkel abgeleitet.

2. Verfahren nach Anspruch 1, **dadurch gekennzeichnet, dass** die Anzahl ausgeschlossener gespeicherter Markierungsabschnitte von der Recheneinheit (30) auf null zurückgesetzt wird, nachdem mittels der Recheneinheit (30) die Zuordnung des ersten Drehwinkels zu dem nicht ausgeschlossenen gespeicherten Markierungsabschnitt ausgeführt wurde, und weiter nachfolgend die Verfahrensschritte nach Anspruch 1 erneut ausgeführt werden.

3. Verfahren nach Anspruch 1, **dadurch gekennzeichnet, dass** nachdem mittels der Recheneinheit (30) die Zuordnung des ersten Drehwinkels zu dem nicht ausgeschlossenen gespeicherten Markierungsabschnitt ausgeführt wurde, mittels der Recheneinheit (30) die in Drehrichtung des ersten Markierungsträgers (110) von dem ersten Sensor (141) abgetasteten Markierungsabschnitte (130, 131, 132) gezählt werden, und nachfolgend mittels der Recheneinheit (30) eine weitere Zuordnung der gezählten abgetasteten Markierungsabschnitte (130, 131, 132) zu dem ersten Drehwinkel vorgenommen wird, und gemäß der weiteren Zuordnung der erste Drehwinkel aktualisiert wird.

**4.** Verfahren nach Anspruch 3, **dadurch gekennzeichnet, dass** das Zählen der vom ersten Sensor (141) abgetasteten Markierungsabschnitte von der Recheneinheit (30) unterbrochen wird, und nachfolgend erneut die Verfahrensschritte nach Anspruch 1 ausgeführt werden.

**5.** Verfahren nach Anspruch 1, **dadurch gekennzeichnet, dass** die Recheneinheit (30) ein Schieberegister aufweist, wobei das Schieberegister eine Reihenschaltung von Schieberegister-Speicher-Elementen aufweist, wobei das Schieberegister Repräsentanzen der gespeicherten Markierungsabschnitte mittels der Schieberegister-Speicher-Elemente speichert, und wobei nachdem mittels der Recheneinheit (30) die Zuordnung des ersten Drehwinkels zu dem nicht ausgeschlossenen gespeicherten Markierungsabschnitt ausgeführt wurde, mittels der Recheneinheit (30) bei jedem in Drehrichtung des ersten Markierungsträgers (110) von dem ersten Sensor (141) abgetasteten Markierungsabschnitt (130, 131, 132) ein Schiebeschritt am Schieberegister ausgeführt wird, wobei der Schiebeschritt ein Fortschreiten der Repräsentanzen der gespeicherten Markierungsabschnitte von einem Schieberegister-Speicher-Element zum in der Reihenschaltung nachfolgenden Schieberegister-Speicher-Element umfasst.

**6.** Verfahren nach einem der vorstehenden Ansprüche, **dadurch gekennzeichnet, dass** ein zweiter Sensor (241) vorgesehen ist, der mit dem Sensorsignal-Eingang (320) verbunden ist, wobei mittels des zweiten Sensors (241), eine sich zyklisch ändernde Eigenschaft des Motors oder ein vom Motor beeinflusster Parameter abgetastet wird.

**7.** Verfahren nach einem der Ansprüche 1 bis 5, **dadurch gekennzeichnet, dass** ein zweiter Markierungsträger (210) mit einem zweiten Markierungsmuster auf einer zweiten Welle (20) vorgesehen ist, wobei die zweite Welle (20) und der zweite Markierungsträger (210) von der ersten Welle (10) in eine Rotationsbewegung versetzt werden, und wobei ein zweiter Sensor (241) vorgesehen ist, der mit dem Sensorsignal-Eingang (320) verbunden ist, wobei mittels des zweiten Sensors (241), mit dem der zweite Markierungsträger (210) abgetastet wird, ein zweites Sensorsignal (245) erzeugt wird, wobei das zweite Sensorsignal (245) mittels des zweiten Sensors (241) moduliert wird, wenn mit dem zweiten Sensor (241) eine vordefinierte Lageänderung des zweiten Markierungsträgers (210) abgetastet wird.

**8.** Verfahren nach Anspruch 5, **dadurch gekennzeichnet, dass** das zweite Sensorsignal (245) von der Recheneinheit (30) ausgewertet wird, und das zweite Sensorsignal (245) eine Information zur Unterscheidung zwischen einer geradzahligen bzw. einer ungeradzahligen Umdrehung der ersten Welle (10) ab einem vordefinierten Nullpunkt des ersten Drehwinkels der ersten Welle (10) aufweist.

**9.** Verfahren nach Anspruch 5, **dadurch gekennzeichnet, dass** das zweite Sensorsignal (245) von der Recheneinheit (30) ausgewertet wird und das zweite Sensorsignal (245) eine Information zur Unterscheidung der Takte eines Ottomotors oder Dieselmotors aufweist.

**10.** Verfahren nach einem der Ansprüche 5 bis 7, **dadurch gekennzeichnet, dass** das erste Sensorsignal (151) mit dem zweiten Sensorsignal (245) zu einem kombinierten Sensorsignal, umfassend die Informationen des ersten und des zweiten Sensorsignals, zusammengefasst wird.

**11.** Verfahren nach einem der vorstehenden Ansprüche, **dadurch gekennzeichnet, dass** die in der Speichereinheit (310) gespeicherten Markierungsabschnitte in komprimierter Form gespeichert sind.

**12.** Verfahren nach einem der vorstehenden Ansprüche, **dadurch gekennzeichnet, dass** die aus dem ersten Sensorsignal (151) zurück gewonnenen Markierungsabschnitte und die gespeicherten Markierungsabschnitte von der Recheneinheit (30) bei der Ermittlung eines ersten Ausschlusskriteriums und/oder eines weiteren Ausschlusskriteriums in komprimierter Form verwendet werden.

**13.** Verfahren nach einem der vorstehenden Ansprüche, **dadurch gekennzeichnet, dass** die gespeicherten Markierungsabschnitte mit unterschiedlich hohen Prioritäten attribuiert sind, und von der Recheneinheit (30) bei der Ermittlung des Ausschlusskriteriums die gespeicherten Markierungsabschnitte in einer Reihenfolge, die durch die Höhe der Prioritäten bestimmt sind, verwendet werden.

**14.** Verfahren nach einem der vorstehenden Ansprüche, **dadurch gekennzeichnet, dass** in der Speichereinheit (310) die Reihenfolge der Markierungsabschnitte (130) des ersten Markierungsträgers (110), entsprechend der Reihenfolge der Annäherung der Markierungsabschnitte des ersten Markierungsträgers (110) an den ersten Sensor (141) bei drehender Welle, gespeichert ist, und mittels der Recheneinheit (30) ein Plausibilitätstest derart ausgeführt wird, dass die gespeicherte Reihenfolge der Markierungsabschnitte des ersten Markierungsträgers (110) mit einer per Abtastung durch den ersten Sensor (141) ermittelten Reihenfolge der Markierungsabschnitte des ersten Markierungsträgers (110) von der Recheneinheit verglichen wird, und wobei von der Recheneinheit (30) im Falle einer Feststellung einer Abweichung der gespeicherten Reihenfolge der Markierungsabschnitte des ersten Markierungsträgers (110) einerseits mit der mit der per Abtastung ermittelten Reihenfolge der Markierungsabschnitte (130) des ersten Markierungsträgers (110) andererseits, ein Fehlerzustand signalisiert wird.

15. Verfahren nach einem der vorstehenden Ansprüche 1 bis 14, **dadurch gekennzeichnet, dass** mittels des ersten Sensors (141) eine Änderung einer kapazitiven, einer induktiven, eine optischen und/oder einer mechanischen Eigenschaft des ersten Markierungsträgers (110) abgetastet wird.

16. Verfahren nach einem der vorstehenden Ansprüche, **dadurch gekennzeichnet, dass** der erste Drehwinkel in vordefinierten Zeitabständen oder zu Zeitpunkten, in denen eine vordefinierte Anzahl von Markierungsabschnitten von dem ersten Sensor (141) abgetastet wurde, jeweils aktualisiert von der Recheneinheit (30) an eine Regelvorrichtung des Motors übermittelt wird.

17. Verfahren nach einem der vorstehenden Ansprüche, **dadurch gekennzeichnet, dass** zumindest ein gespeicherter Markierungsabschnitt mit einem Toleranzbereich versehen wird, wobei der Wertebereich des gespeicherten Markierungsabschnittes um den Toleranzbereich erweitert wird.

18. Verfahren nach Anspruch 17, **dadurch gekennzeichnet, dass** der Toleranzbereich variable Bereichsgrenzen aufweist, wobei die Bereichsgrenzen eine Funktion der Drehzahl der ersten Welle ist oder eine Funktion der Winkelbeschleunigung der ersten Welle ist oder eine Funktion des der ersten Welle zugeordneten Drehwinkels ist, der vor der Berechnung der Bereichsgrenzen von der Recheneinheit ermittelt wird.

19. Verfahren nach einem der vorstehenden Ansprüche, **dadurch gekennzeichnet, dass** die erste Welle (10) eine Kurbelwelle eines Verbrennungsmotors ist.

20. Verfahren einem der vorstehenden Ansprüche, **dadurch gekennzeichnet, dass** die zweite Welle (20) eine Nockenwelle eines Verbrennungsmotors ist.

**Claims**

1. A method for capturing a first angle of rotation of a first shaft (10) of an engine,

> - a first marking carrier (110) having sensor-readable markings (133, 134, 135, 136, 137) being provided, the markings (133, 134, 135, 136, 137) forming a first marking pattern,
> - the first marking pattern having marking segments comprising at least one first marking segment and one second marking segment,
> - the first marking carrier (110) being set in a rotary motion by a first shaft (10),
> - the angle of rotation of the first shaft (10) being proportional to the angle of rotation of the first marking carrier (110),

the first marking carrier (110) being scanned by means of the first sensor (141) and a first sensor signal (151) being generated by the first sensor (141) during the scanning, the first sensor signal (151) being modulated by means of the markings (133,134,135,136,137) on the first marking carrier (110), and
an angular velocity of the first shaft being known or able to be estimated for at least part of a revolution and being assumed approximately constant, and
a computing unit (30) being provided, comprising

> - a memory unit (310) having a memory area (311) having stored marking segments, comprising at least one first stored marking segment and one second stored marking segment,
> - one sensor signal input (320),
> - one time encoder (330) having a time signal,

an association between a time progression of the first sensor signal (151) and a time signal being performed by means of the computing unit (30), and the following method steps being performed by means of the computing unit (30):

a) recovering a first marking segment from the first sensor signal (151), and then

b) deriving a first exclusion criterion from the recovered first marking segment for excluding the first stored marking segment, and then

c) excluding the first stored marking segment by means of the first exclusion criterion, and then

d) checking whether a difference of a total number of stored marking segments less a number of excluded stored marking segments is equal to one, and transitioning to method step g) if the difference is equal to 1, and transitioning to method step e) if the difference is greater than one,

e) recovering a further marking segment from the first sensor signal (151), deriving a further exclusion criterion, excluding a further stored marking segment by means of the further exclusion criterion, and then

f) performing method step d) again,

g) deriving the first angle of rotation from the non-excluded stored marking segment.

2. The method according to claim 1, **characterized in that** the number of excluded stored marking segments is reset to zero by the computing unit (30) after the association of the first angle of rotation to the non-excluded stored marking segment has been performed by means of the computing unit (30), and the method steps according to claim 1 are then subsequently performed again.

3. The method according to claim 1, **characterized in that** after the association of the first angle of rotation with the non-excluded stored marking segment has been performed by means of the computing unit (30), the marking segments (130, 131, 132) scanned by the first sensor (141) in the direction of rotation of the first marking carrier (110) are counted by means of the computing unit (30), and then a further association of the counted scanned marking segments (130, 131, 132) with the first angle of rotation is performed by means of the computing unit (30), and the first angle of rotation is updated according to the further association.

4. The method according to claim 3, **characterized in that** the counting of the marking segments scanned by the first sensor (141) is interrupted by the computing unit (30) and then the method steps according to claim 1 are performed again.

5. The method according to claim 1, **characterized in that** the computing unit (30) comprises a shift register, wherein the shift register comprises a series circuit of shift register memory elements and the shift register stores representations of the stored marking segments by means of the shift register memory elements, and wherein, after the association of the first angle of rotation with the non-excluded stored marking segment has been performed by means of the computing unit (30), one shift step is performed on the shift register by means of the computing unit (30) for each marking segment (130, 131, 132) scanned by the first sensor (141) in the direction of rotation of the first marking carrier (110), wherein the shift step comprises advancing the representations of the stored marking segments from one shift register memory element to the subsequent shift register memory element in the series circuit.

6. The method according to any one of the preceding claims, **characterized in that** a second sensor (241) is connected to the sensor signal input (320), wherein a cyclically varying property of the engine or a parameter influenced by the engine is scanned by means of the second sensor (241).

7. The method according to any one of the claims 1 through 5, **characterized in that** a second marking carrier (210) having a second marking pattern is provided on a second shaft (20), wherein the second shaft (20) and the second marking carrier (210) are set in rotary motion by the first shaft (10), and wherein a second sensor (241) is connected to the sensor signal input (320), wherein a second sensor signal (245) is generated by means of the second sensor (241), by means of which the second marking carrier (210) is scanned, wherein the second sensor signal (245) is modulated by means of the second sensor (241) if a predefined change in location of the second marking carrier (210) is scanned by means of the second sensor (241).

8. The method according to claim 5, **characterized in that** the second sensor signal (245) is evaluated by the computing unit (30) and the second sensor signal (245) comprises information for differentiating between an even number or an odd number of revolutions of the first shaft (10) starting from a predefined origin of the first angle of rotation of the first shaft (10).

9. The method according to claim 5, **characterized in that** the second sensor signal (245) is evaluated by the computing unit (30) and the second sensor signal (245) comprises information for differentiating the cycles of a gasoline engine and a diesel engine.

10. The method according to any one of the claims 5 through 7, **characterized in that** the first sensor signal (151) is combined with the second sensor signal (245) and forms a combined sensor signal comprising the information of the first and the second sensor signals.

11. The method according to any one of the preceding claims, **characterized in that** the marking segments stored in the memory unit (310) are stored in compressed form.

12. The method according to any one of the preceding claims, **characterized in that** the marking segments recovered from the first sensor signal (151) and the stored marking segments are used in compressed form by the computing unit (30) when deriving a first exclusion criterion and/or a further exclusion criterion.

13. The method according to one of the preceding claims, **characterized in that** the stored marking segments are attributed with different priority levels and the stored marking segments are used by the computing unit (30) in a sequence determined by the priority levels when deriving the exclusion criteria.

14. The method according to any one of the preceding claims, **characterized in that** the sequence of marking segments (130) of the first marking carrier (110) is stored in the memory unit (310) according to the sequence of the proximity of the marking segments of the first marking carrier (110) to the first sensor (141) when the shaft is rotating, and a plausibility test is performed by means of the computing unit (30), such that the stored sequence of marking segments of the first marking carrier (110) is compared by the computing unit with a sequence of marking segments of the first marking carrier (110) determined by the sensor (141) by scanning, and wherein an error condition is signaled by the computing unit (30) in the case that a deviation of the stored sequence of marking segments of the first marking carrier (110) from the sequence of marking segments (130) of the first marking carrier (110) determined by scanning is identified.

15. The method according to any one of the preceding claims 1 through 14, **characterized in that** a change in a capacitive, an inductive, an optical, and/or a mechanical property of the first marking carrier (110) is scanned by means of the first sensor (141).

16. The method according to any one of the preceding claims, **characterized in that** the first angle of rotation is updated at predefined time intervals, or at times at which a predefined number of marking segments has been scanned by the first sensor (141) and in each case transmitted by the computing unit (30) to a control device of the engine.

17. The method according to any one of the preceding claims, **characterized in that** at least one stored marking segment is provided with a tolerance range, wherein the range of values of the stored marking segment is expanded by the tolerance range.

18. The method according to claim 17, **characterized in that** the tolerance range comprises variable range limits, wherein the range limits are a function of the angular speed of the first shaft or a function of the angular acceleration of the first shaft or a function of the angle of rotation associated with the first shaft, as determined by the computing unit prior to computing the range limits.

19. The method according to any one of the preceding claims, **characterized in that** the first shaft (10) is a crankshaft of a combustion engine.

20. The method according to any one of the preceding claims, **characterized in that** the second shaft (20) is a camshaft of a combustion engine.

## Revendications

1. Procédé pour saisir un premier angle de rotation (10) d'un moteur, dans lequel

   - est prévu un premier support de marquage (110) avec des marques (133, 134, 135, 136, 137) lisibles par capteur, sachant que les marques (133, 134, 135, 136, 137) forment un premier schéma de marquage,
   - le premier schéma de marquage présente des sections de marquage comprenant au moins une première section de marquage et une seconde section de marquage,
   - le premier support de marquage (110) est entraîné dans un mouvement de rotation par le premier arbre (10),

- et il existe une proportionnalité entre l'angle de rotation du premier arbre (10) et l'angle de rotation du premier support de marquage (110),

le premier support de marquage (110) est exploré à l'aide d'un premier capteur (141) et un premier signal de capteur (151) est généré par le premier capteur (141) pendant l'exploration, sachant que le premier signal de capteur (151) est modulé à l'aide des marquages (133, 134, 135, 136, 137) sur le premier support de marquage (110), et dans lequel au moins pour une partie d'une rotation une vitesse angulaire du premier arbre est connue ou estimable et peut approximativement être considérée constante, et dans lequel est prévue une unité de calcul (30), comportant

- une unité de mémoire (310) avec une zone de mémoire (311) avec des sections de marquage, comportant au moins une première section de marquage enregistrée et une seconde section de marquage enregistrée,
- une entrée (320) de signal de capteur,
- un générateur de rythme (330) avec un signal de temps,

sachant qu'une attribution est effectuée par l'unité de calcul (30) entre une variation temporelle du premier signal de capteur (151) et le signal de temps, et sachant que les étapes de procédé suivantes sont exécutées à l'aide de l'unité de calcul (30) :

a) une première section de marquage est récupérée depuis le premier signal de capteur (151), et ensuite,
b) il est déterminé sur la base de la première section de marquage récupérée un premier critère d'exclusion pour l'exclusion de la première section de marquage enregistrée, et ensuite,
c) la première section de marquage enregistrée est exclue sur la base du premier critère d'exclusion, et ensuite
d) il est vérifié si une différence d'un nombre total de sections de marquage enregistrées moins un nombre de sections de marquage enregistrées exclues est égale à un, et le procédé passe à l'étape de procédé g) dans le cas où la différence est égale à un, et le procédé passe à l'étape de procédé e) dans le cas où la différence est supérieure à un,
e) une section de marquage supplémentaire est récupérée depuis le premier signal de capteur (151), un critère d'exclusion supplémentaire est déterminé, une section de marquage enregistrée supplémentaire est exclue sur la base du critère d'exclusion supplémentaire, et ensuite,
f) l'étape de procédé d) est à nouveau exécutée,
g) le premier angle de rotation est dérivé de la première section de marquage enregistrée qui n'est pas exclue.

2. Procédé selon la revendication 1, **caractérisé en ce que** le nombre de sections de marquage enregistrées exclues est remis à zéro par l'unité de calcul (30) après que l'attribution du premier angle de rotation à la section de marquage enregistrée non exclue ait été effectuée par l'unité de calcul (30), et ensuite, les étapes de procédé selon la revendication 1 sont à nouveau exécutées.

3. Procédé selon la revendication 1, **caractérisé en ce que**, après que l'attribution du premier angle de rotation à la section de marquage enregistrée non exclue ait été exécutée par l'unité de calcul (30), les sections de marquage (130, 131, 132) explorées par le premier capteur (141) dans le sens de rotation du premier support de marquage (110) sont comptées par l'unité de calcul (30), et ensuite, une attribution supplémentaire des sections de marquage (130, 131, 132) explorées comptées au premier angle de rotation est effectuée à l'aide de l'unité de calcul (30) et le premier angle de rotation est mis à jour sur la base de l'attribution supplémentaire.

4. Procédé selon la revendication 3, **caractérisé en ce que** le comptage des sections de marquage explorées par le premier capteur (141) est interrompu par l'unité de calcul (30), et, ensuite, les étapes de procédé selon la revendication 1 sont à nouveau exécutées.

5. Procédé selon la revendication 1, **caractérisé en ce que** l'unité de calcul (30) comporte un registre à décalage, sachant que le registre à décalage comporte un couplage en série d'éléments de mémoire de registre à décalage, sachant que le registre à décalage enregistre au moyen des éléments de mémoire de registre à décalage des représentants des sections de marquage enregistrées, et sachant que, après que l'attribution du premier angle de rotation à la section de marquage enregistrée non exclue ait été effectuée par l'unité de calcul (30), une étape de décalage au registre à décalage est exécutée par l'unité de calcul (30) pour chaque section de marquage (130, 131, 132) explorée par le premier capteur (141) dans le sens de rotation du premier support de marquage (110), et sachant que l'étape de décalage comprend une continuation des représentants des sections de marquage enregistrées depuis un élément de mémoire du registre à décalage à l'élément de mémoire du registre à décalage subséquent dans le couplage en série.

6. Procédé selon l'une des revendications précédentes, **caractérisé en ce qu'**il est prévu un second capteur (241), qui est relié avec l'entrée (320) de signal de capteur, sachant qu'une caractéristique du moteur variant de manière cyclique ou un paramètre influencé par le moteur est exploré à l'aide du second capteur (241).

7. Procédé selon l'une des revendications 1 à 5, **caractérisé en ce qu'**un second support de marquage (210) avec un second schéma de marquage est prévu sur un second arbre (20), sachant que le second arbre (20) et le second support de marquage (210) sont entraînés en rotation par le premier arbre (10), et sachant qu'il est prévu un second capteur (241) qui est relié avec l'entrée (320) de signal de capteur, et sachant qu'un second signal de capteur (245) est généré à l'aide du second capteur (241), à l'aide duquel le second support de marquage (210) est exploré, sachant que le second signal de capteur (245) est modulé à l'aide du second capteur (241) si une variation de position prédéfinie du second support de marquage (210) est explorée à l'aide du second capteur (241)

8. Procédé selon la revendication 5, **caractérisé en ce que** le second signal de capteur (245) est analysé par l'unité de calcul (30), et le second signal de capteur (245) contient une information permettant une différentiation entre une rotation paire et impaire du premier arbre (10) à partir d'un point zéro prédéfini du premier angle de rotation du premier arbre (10).

9. Procédé selon la revendication 5, **caractérisé en ce que** le second signal de capteur (245) est analysé par l'unité de calcul (30) et le second signal de capteur (245) contient une information permettant une différentiation des cycles d'un moteur à essence ou d'un moteur diesel.

10. Procédé selon l'une des revendications 5 à 7, **caractérisé en ce que** le premier signal de capteur (151) et le second signal de capteur (245) sont combinés en un signal de capteur combiné contenant les informations du premier et du second signal de capteur.

11. Procédé selon l'une des revendications précédentes, **caractérisé en ce que** les sections de marquage enregistrées dans l'unité de mémoire (310) sont enregistrées sous forme comprimée.

12. Procédé selon l'une des revendications précédentes, **caractérisé en ce que** les sections de marquage récupérées depuis le premier signal de capteur (151) et les sections de marquage enregistrées sont utilisées sous forme comprimée par l'unité de calcul (30) lors de la détermination d'un premier critère d'exclusion et/ou d'un critère d'exclusion supplémentaire.

13. Procédé selon l'une des revendications précédentes, **caractérisé en ce que** des priorités différemment élevées sont attribuées aux sections de marquage enregistrées, et les sections de marquage enregistrées sont utilisées par l'unité de calcul (30), lors de la détermination du critère d'exclusion, dans un ordre de séquence qui est déterminé par la hauteur de la priorité.

14. Procédé selon l'une des revendications précédentes, **caractérisé en ce que** dans l'unité de mémoire (310), l'ordre des sections de marquage (130) du premier support de marquage (110) est enregistrée suivant l'ordre d'approche des sections de marquage du premier support de marquage (110) au premier capteur (141) pendant la rotation de l'arbre, et un test de vraisemblance est exécuté par l'unité de calcul (30) en ce sens que l'ordre enregistré des sections de marquage du premier support de marquage (110) est comparé par l'unité de calcul avec un ordre des sections de marquage du premier support de marquage (110) déterminé par exploration par le premier capteur (141), et sachant qu'un état de défaut est signalé par l'unité de calcul (30) en cas de constatation d'un écart entre, d'une part, l'ordre enregistré des sections de marquage du premier support de marquage (110) et, d'autre part, l'ordre des sections de marquage (130) du premier support de marquage (110) déterminé par exploration.

15. Procédé selon l'une des revendications 1 à 14 précédentes, **caractérisé en ce qu'**une modification d'une caractéristique capacitive, inductive, optique et/ou mécanique du premier support de marquage (110) est explorée par le premier capteur (141).

16. Procédé selon l'une des revendications précédentes, **caractérisé en ce que** le premier angle de rotation est transmis par l'unité de calcul (30), respectivement mis à jour à des intervalles de temps prédéfinis ou à des instants auxquels un nombre prédéfini de sections de marquage a été exploré par le premier capteur (141), à un dispositif de régulation du moteur.

**17.** Procédé selon l'une des revendications précédentes, **caractérisé en ce qu'**une plage de tolérance est attribuée à au moins une section de marquage enregistrée, sachant que la plage de valeurs de la section de marquage enregistrée est élargi de la plage de tolérance.

**18.** Procédé selon la revendication 17, **caractérisé en ce que** la plage de tolérance présente des limites de plage variables, sachant que les limites de plage sont une fonction de la vitesse de rotation du premier arbre ou une fonction de l'accélération angulaire du premier arbre ou une fonction de l'angle de rotation attribué au premier arbre, qui est déterminé par l'unité de calcul avant le calcul des limites de plage.

**19.** Procédé selon l'une des revendications précédentes, **caractérisé en ce que** le premier arbre (10) est un arbre à manivelle d'un moteur à combustion interne.

**20.** Procédé selon l'une des revendications précédentes, **caractérisé en ce que** le second arbre (20) est un arbre à cames d'un moteur à combustion interne.

FIG. 1

FIG. 2

EP 2 587 225 B1

FIG. 3

FIG.4

FIG. 4A

FIG. 4B

FIG. 4C

FIG. 4D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004053156 A1
- DE 102004045191 B3
- DE 2825316 A1